# EUROPEAN PATENT APPLICATION

(11) **EP 4 841 914 A2**
(43) Date of publication of application: **18.11.2026**
(21) Application number: 26208042.7
(22) Date of filing: 28.08.2023
(51) Int. Cl.: H04B 7/204

(54) **METHODS AND APPARATUS FOR SCHEDULING TERMINALS IN A SATELLITE COMMUNICATIONS SYSTEM**

(30) Priority: 30.08.2022 US 202263402383 P
(62) Document number(s) of the earlier application(s) in accordance with Art. 76 EPC: 23776158.0 / 4 573 679
(71) Applicant: ViaSat, Inc., Carlsbad, CA 92009 (US)
(72) Inventor: BERNDSEN, Nicholas G., Carlsbad, 92009 (US); CHAUGHULE, Arya, Carlsbad, 92009 (US); HILL, Laura K., Carlsbad, 92009 (US); HOFFMAN, Anton, Carlsbad, 92009 (US); PETRANOVICH, James E., Carlsbad, 92009 (US)
(74) Representative: Murphy, Orla

(57) **Abstract**

Techniques for scheduling a plurality of terminals assigned to a user beam of a satellite communications system involve selecting different beam center targets for the user beam over a succession of scheduling intervals and scheduling respective ones among the terminals over the succession of scheduling intervals according to per-terminal signal-quality metrics that vary with respect to the different beam center targets. Changing the beam center target over the succession of scheduling intervals means that each terminal can experience good, or at least relatively better, signal quality during at least some of the scheduling intervals, which in turn allows a scheduler to schedule respective ones of the terminals primarily on the one or more scheduling intervals in which they experience the good or relatively better signal quality. Benefits flowing from this approach include higher overall capacity for the user beam while maintaining service fairness for the assigned terminals.

## Description

### TECHNICAL FIELD

Methods and apparatuses disclosed herein embody techniques for scheduling terminals assigned to a user beam of a satellite communications system.

### BACKGROUND

"User scheduling" refers to the handling of user traffic for a multiplicity of users of a communications system and particularly refers to scheduling transmission resources to carry traffic for respective users in a manner that satisfies one or more scheduling goals. Example goals include maximizing beam capacity, ensuring proportional fairness among the users, etc. User scheduling applies to one or both the forward-link direction where the involved communications system carries traffic towards the users and the return-link direction where the communications system carries traffic from the users, such as for forwarding to other systems or devices. In this context, each "user" is, for example, a communications device-a terminal-that uses the communications system for sending and receiving traffic.

User scheduling features prominently in a variety of types of communications systems, with satellite communications systems being one example. A satellite communications system provides service over a potentially large geographic area, referred to as a satellite service area. A potentially large population of terminals to be served by the satellite communications system may be distributed within the satellite service area. One approach to serving the population of terminals involves logically subdividing the satellite service area and serving the subdivisions with respective user beams.

A "user beam" in this context refers to a signal having spatially focused transmission or reception, meaning that the signal strength has a corresponding directionality. User beams may be formed in a variety of ways, including through the use of spot-beam antenna systems, ground-based beamforming (GBBF), and the use of phased array antennas onboard the satellite(s). User beams illuminating adjacent subdivisions within a satellite service area may be differentiated in terms of frequency, polarization, etc. Terminals located within a given subdivision are assigned to a user beam associated with that subdivision. Of course, any given subdivision or region within the larger satellite service area may be associated with more than one forward user beam and/or more than one return user beams, e.g., based on using different signal frequencies, polarizations, or other diversity techniques.

Scheduling the plurality of terminals assigned to a given user beam involves deciding which terminals are served at which times on the user beam. Multiple challenges arise in the scheduling context, with scheduling decisions necessarily based on a multiplicity of concerns or goals, including maximizing beam capacity while meeting service objectives for the individual terminals being scheduled.

### SUMMARY

Techniques for scheduling a plurality of terminals assigned to a user beam of a satellite communications system involve selecting different beam center targets for the user beam over a succession of scheduling intervals and scheduling respective ones among the terminals over the succession of scheduling intervals according to per-terminal signal-quality metrics that vary with respect to the different beam center targets. Changing the beam center target over the succession of scheduling intervals means that each terminal can experience good, or at least relatively better, signal quality during at least some of the scheduling intervals. In turn, this allows a scheduler to schedule respective ones of the terminals primarily on the one or more scheduling intervals in which they experience the good or relatively better signal quality. Benefits flowing from this approach include higher overall capacity for the user beam while maintaining service fairness for the assigned terminals.

An example embodiment comprises a method of scheduling terminals in a satellite communications system. The method includes (a) obtaining assignment information indicating assignment of a plurality of terminals to a user beam of the satellite communications system, the user beam being associated with a nominal user beam coverage area and the plurality of terminals located within the nominal user beam coverage area, (b) selecting different beam center targets for the user beam over a succession of scheduling intervals according to a beam oscillation cycle, wherein the different beam center targets are different locations within the nominal user beam coverage area, and (c) scheduling respective ones among the plurality of terminals over the succession of scheduling intervals in dependence on per-terminal signal quality metrics that vary in relation to the different beam center targets.

A related embodiment comprises a satellite communications system (SCS). The SCS includes a satellite comprising a plurality of cooperating antenna elements configured for use in forming a user beam that is associated with a nominal user beam coverage area, wherein the user beam is used to serve terminals located in the nominal user beam coverage area. A beam oscillation controller of the SCS is configured to select different beam center targets for the user beam over a succession of scheduling intervals according to a beam oscillation cycle, wherein the different beam center targets are different locations within the nominal user beam coverage area. A beamformer of the SCS is configured to oscillate the user beam during the beam oscillation cycle by changing the beam weights used to form the user beam in dependence on the selected beam center targets, and a scheduling controller of the SCS is configured to schedule respective ones among the plurality of terminals over the succession of scheduling intervals in dependence on per-terminal signal quality metrics that vary in relation to the different beam center targets.

Of course, the present invention is not limited to the above features and advantages. Those skilled in the art will recognize additional features and advantages upon reading the following detailed description, and upon viewing the accompanying drawings.

### BRIEF DESCRIPTION OF THE DRAWINGS

Figure 1 is a block diagram of a satellite communications system (SCS), according to an example embodiment.
Figure 2 is a diagram of a user beam of a SCS, shown in cross section.
Figures 3 and 4 are respective diagram of a beam oscillation cycle, according to example embodiments.
Figure 5 is a diagram of a nominal user beam coverage area containing different beam center targets, according to an example embodiment.
Figure 6 is a diagram of a favorability table used for scheduling terminals in a SCS, according to an example embodiment.
Figures 7a-7g are diagrams illustrating a beam oscillation cycle according to an example embodiment.
Figure 8 is a logic flow diagram illustrating a method of scheduling terminals in a SCS, according to an example embodiment.
Figure 9 is a plot illustrating a byte distribution function used in assigning terminal bytes to scheduling intervals, according to an example embodiment.
Figure 10 is a diagram of an efficiency table, as an example type of favorability table.
Figure 11 is a diagram of a pseudo-efficiency (PE) table used in scheduling terminals, according to an example embodiment.
Figure 12 is a diagram of a frequency reuse plan across a plurality of nominal user beam coverage areas to which a common beam oscillation cycle is applied, according to an example embodiment.
Figure 13 is a diagram illustrating the common beam oscillation cycle at issue in Figure 12.
Figure 14 is a block diagram illustrating functional logic used for scheduling and serving terminals of a SCS, according to an example embodiment.
Figure 15 is a block diagram of a SCS in a forward beamforming context, according to an example embodiment.
Figure 16 is a block diagram of a SCS in a return beamforming context, according to an example embodiment.
Figure 17 is a block diagram of a SCS in a forward beamforming context, according to another example embodiment.
Figure 18 is a block diagram of a SCS in a return beamforming context, according to another example embodiment.
Figure 19 is a logic flow diagram of a method of operation by a SCS, according to an example embodiment.

### DETAILED DESCRIPTION

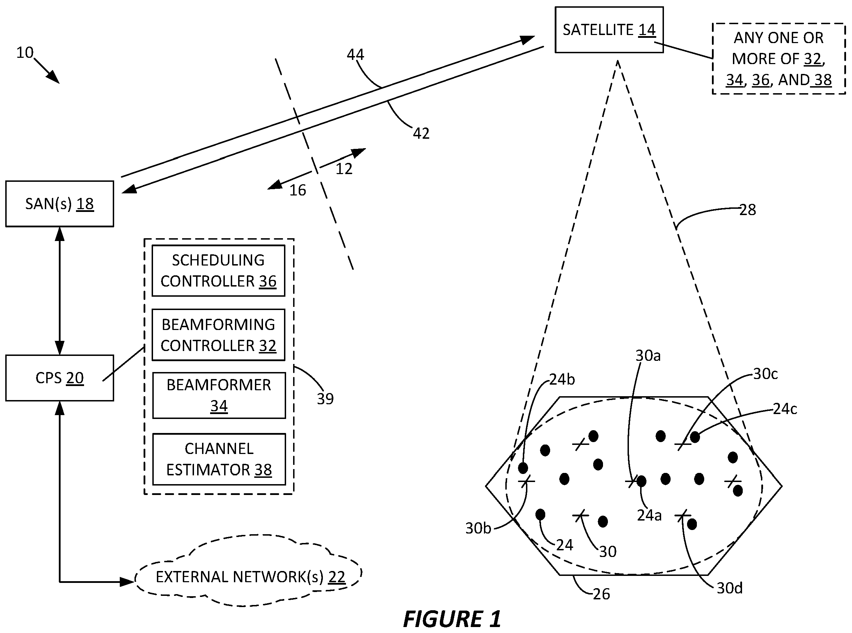

Figure 1 illustrates a satellite communications system (SCS) 10 that includes a space segment 12 comprising one or more satellites 14 and a ground segment 16 comprising one or more satellite access nodes (SANs) 18. The ground segment 16, also referred to as a ground network, includes a communications processing system (CPS) 20. The CPS 20 interfaces the SCS 10 with one or more external networks 22, such as the Internet. The CPS 20 provides routing and processing of user traffic incoming to the SCS 10 for delivery as forward user traffic to respective terminals 24 served by the SCS 10, and routing and processing of return user traffic transmitted by respective ones of the terminals 24, for forwarding to external devices or systems reachable through the external network(s) 22.

From a system design perspective, one approach to providing satellite-based communications services involves logically subdividing a potentially large geographic region into a fixed set of uniform abutting polygonal areas. Each polygonal area represents a nominal user beam coverage area 26 intended to be served by an associated one among a plurality of user beams 28-spot beams-used by the SCS 10 to serve a population of terminals 24 distributed within the geographic region. For ease of illustration, Figure 1 depicts one example nominal user beam coverage area and an associated user beam 28.

With each user beam 28 logically associated on a fixed one-to-one mapping with a particular nominal user beam coverage area 26, the SCS assigns any given terminal 24 to the user beam 28 that is associated with the nominal user beam coverage area 26 in which the terminal 24 is located. Because of the one-to-one mapping of nominal user beam coverage areas 26 to user beams 28, saying that a terminal 24 is assigned to a user beam 28 may be understood as saying that the terminal 24 is served by the user beam 28 that is used to serve terminals 24 located within that nominal user beam coverage 26. A terminal 24 may be on the ground or airborne. In the latter case, the nominal user beam coverage area 26 in which the terminal 24 is located may depend on the altitude of the terminal 24.

For each user beam 28, there is a nominal pointing direction that aligns the beam center of the user beam 28 with a nominal beam center target associated with the corresponding nominal user beam coverage area 26. For example, the nominal beam center target for each user beam 28 corresponds to the geometric center of the corresponding nominal user beam coverage area 26. Here, "beam" refers to a directional transmission or reception, and "beam center" refers to the point of highest signal strength within the cross-section or footprint of a user beam 28. The beam width of each user beam 28, e.g., the 3 dB beam width, is configured according to the size of the nominal user beam coverage areas 26.

Each user beam 28 is defined or otherwise formed using a respective set of beam weights. As such, there exists, at least theoretically, nominal values for the set of beam weights for each user beam 28 that result in the user beam 28 being oriented in its nominal pointing direction. As is understood in the context of signal beam forming, beam weight values are amplitude and/or phase values corresponding to respective ones among a plurality of antenna elements used for beam forming signal transmission or reception. The user beams 28 may be forward user beams formed via transmit beamforming or may be return user beams formed via reception beamforming.

Although the SCS 10 assigns terminals 24 to user beams 28 based on terminal locations relative to the nominal user beam coverage areas 26, the SCS 10 does not maintain the user beams 28 in their nominal pointing directions and instead uses "beam oscillation." Beam oscillation means using different pointing directions at different times during a beam oscillation cycle. Each pointing direction used for a given user beam 28 may be defined by a corresponding beam center target and, for any given user beam 28 and its associated nominal user beam coverage area 26, the different beam center targets correspond to different locations within the nominal user beam coverage area 26. As such, the beam center moves around within the nominal user beam coverage area 26 over the beam oscillation cycle.

Because the set of terminals assigned to any given user beam 28 does not change as a function of the oscillations, the different pointing directions used for dynamically reorienting a user beam 28 over a beam oscillation cycle are considered as the same beam being pointed in different directions at different times, rather than considered as the transmission of different beams at different times. In more detail, for any given nominal user beam coverage area 26, there is a beam signal that carries multiplexed user traffic for those terminals 24, and it is that beam signal for which beamforming is performed, for realization of the corresponding user beam 28, and the logical association between beam identity, assigned terminals 24, and involved nominal user beam coverage area 26 does not change with oscillation of the user beam 28, although the oscillation does cause the terrestrial footprint of the beam to move around during each beam oscillation cycle.

Because of the oscillation of the given user beam 28, different terminals 24, or different subsets of terminals 24 among the assigned terminals 24, are closer to or further from the beam center at different times during the beam oscillation cycle. Scheduling techniques disclosed herein opportunistically exploit the resulting characteristic variations in per-terminal signal quality and do so without requiring foreknowledge of the beam oscillations, as the characteristic signal quality variations can be learned by the involved scheduler. Because the set of terminals 24 assigned to a given user beam 28 logically share the user beam 28 in the sense that traffic to or from respective ones of the terminals 24 is conveyed via the beam in multiplexed fashion, "scheduling" refers to the ongoing process of deciding which particular ones among the assigned terminals 24 are served via the user beam at which particular times.

With respect to a plurality of user beams 28, scheduling may be performed on a per-beam basis in the forward direction and in the return direction. However, as explained herein, beam oscillation may be performed jointly with respect to a contiguous set of nominal user beam coverage areas 26.

With respect to the nominal user beam coverage area 26 depicted in the example of Figure 1, there are multiple different beam center targets 30 distributed within the nominal user beam coverage area 26. The satellite 14 or CPS 20 of the SCS 10 includes or is associated with a beamforming controller 32, a beamformer 34, a scheduling controller 36, and a channel estimator. In another embodiment, any one or more of these entities are implemented via circuitry onboard the satellite 14.

In at least one embodiment, the beamforming controller 32 is configured to select different ones of the beam center targets 30 at different times, meaning that it controls or otherwise oversees the beam oscillation operations. In at least one embodiment, the beamforming controller 32 is configured to calculate or select the beam weights used to form the user beam(s) 28, meaning that it stores or calculates the differing beam weight values needed to center any given user beam 28 on each one of the different beam center targets 30 used for oscillating that given user beam 28.

The beamformer 34 comprises digital domain or analog domain circuitry, or a mix thereof, in dependence on the type of beamforming used and in dependence on whether the beamformer is implemented in the ground segment 12 or onboard the satellite 14 in the space segment 16. In any case, the beamformer 34 is the entity that applies beam weights to the involved signal(s) and includes divider circuitry, weighting circuitry, and summing circuitry as needed for the involved signal weighting. In one or more embodiments, the beamforming controller 32 includes or otherwise subsumes the beamformer 34-i.e., consolidated circuitry controls beam oscillation and applies the dynamically-changing beam weights used to manifest the beam oscillations. Oscillation control and weight application both may be performed in the ground segment 16 or in the space segment 12, or oscillation control may be performed in the ground segment 16, with weight application performed in the space segment 12.

The scheduling controller 36 is configured to schedule respective ones of the terminals 24 in dependence on the characteristic changes in per-terminal signal quality arising from beam oscillation. As noted, the scheduling controller 36 need not be aware of the particular beam center targets 30 or, more broadly, the use of beam oscillation, because the effects of beam observation are observable by the scheduling controller in one or more signal-quality related metrics used by it in making scheduling decisions. Said differently, a given terminal 24 assigned to the user beam 28 that is associated with the nominal user beam coverage area 26 in which the terminal 24 is located will be characteristically more attractive or less attractive for scheduling at different times within each beam oscillation cycle, in dependence on the user beam 28 being pointed at different beam center targets 30 during the beam oscillation cycle

The beam oscillation controller 32 and the scheduling controller 36 may be implemented at least in part programmatically, such as where the implementing circuitry comprises one or more memories storing computer program instructions that, when executed by one or more microprocessors or other digital processors, configure the processor(s) to carry out the beam oscillation control and terminal scheduling operations described herein.

The specific configuration of the beamforming controller 32 depends upon the particular technique used by the SCS 10 for forming and controlling the user beam 28. The beamforming controller 32 may or may not include the beamformer 34, which actually applies beam weights in the involved transmit or receive signal paths for formation of the user beams 28. However, the beamforming controller 32 provides beam weight computation in one or more embodiments, or at least coordinates the application of beam weights by the beamformer 34 to carry out the beam oscillation cycles, meaning that the involved user beams 28 are dynamically repointed at respective ones among different beam center targets 30 during each beam oscillation cycle. For example, the beamforming controller 32 in one or more embodiments computes beam weights that are transferred to the satellite 14, for application by a beamformer 34 residing onboard the satellite 14.

The circuitry comprising the beamformer 34 applies the involved beam weights in the digital or analog signal domains. For example, a forward beamformer divides a signal to be transmitted into respective copies, each copy to be transmitted from one among a plurality of cooperating antennas or antenna elements, and weights each copy with a respective beam weight from a set of beam weights where each such weight corresponds with a respective one among the plurality of cooperating antennas or antenna elements. "Cooperating" here refers to overlapping antenna patterns between or among the plurality of antennas/antenna elements used in the beamforming.

The simultaneous transmission of these weighted copies from the plurality of cooperating antennas or antenna elements result in far-field signal superpositions that yield the desired beam. A return beamformer provides directional reception sensitivity with respect to a signal incoming on a plurality of cooperating antennas or antenna elements, based on applying respective beam weights from a set of beam weights to the per-antenna versions of the incoming signal. Such weighting may be performed in the analog or digital domain, such that a return user beam exists only in the signal processing domain.

Calculation of the beam weights may be based on channel estimates, such as provided by the channel estimator 38. The channel estimator 38 determines channel estimates, for example, based on Channel State Information (CSI) determined or provided to it for the involved propagation channels. In one or more embodiments, these various controllers may be realized as an overall collection of processing circuitry 39, which in turn may be realized at least in part via the execution of stored computer program instructions by one or more networked computer servers, for example.

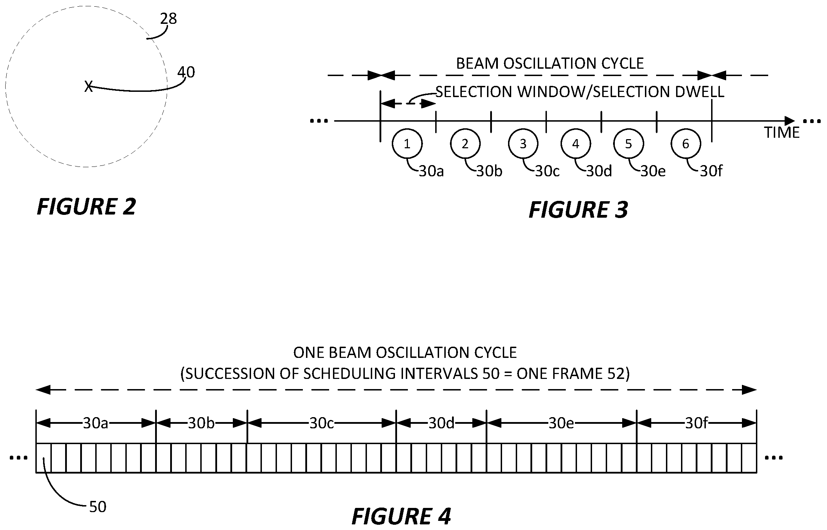

Figure 2 illustrates that an example user beam 28 has a beam center 40, with the user beam 28 depicted in cross-section. "Beam center" corresponds with the direction of highest transmit power in a forward user beam context, and corresponds with the direction of highest receive sensitivity in a return user beam context. The extents of the user beam 28 may be defined in terms of its 3 dB beamwidth, for example. The 3 dB beamwidth is defined by the point(s) where the power or gain has dropped by half relative to the peak at the beam center 40. As a general proposition, beamforming is configured such that the terrestrial footprints of the user beams 28 have a size matched with the size of the nominal user beam coverage areas 26.

Turning back to Figure 1, the beam oscillation controller 32 selecting a particular beam center target 30 within a nominal user beam coverage area 26 corresponds with the SCS 10 pointing-centering-the associated user beam 28 on the selected beam center target 30. For example, the beam oscillation controller 32 indicates the beam-center target selections or the corresponding values of beam weights to the beamformer 34-either one at a time or as a selection schedule. Corresponding to the selection of any given beam center target 30 within a nominal user beam coverage area 26, the beamforming controller 32 computes, selects or otherwise initiates the application of the corresponding values of beam weights that result in the user beam 28 being focused on the selected beam center target 30. A beam center target 30 may be expressed in geographic coordinates and translated into beam angles-azimuth and elevation-referenced to the satellite 14, or may be expressed in beam angles.

Consider a detailed example where there is plurality of beam center targets 30 used for a nominal user beam coverage area 26. The geometric center of the nominal user beam coverage area 26 may be designated as the nominal beam center target for the user beam 28 that serves the nominal user beam coverage area 26, meaning that the nominal beam center target corresponds to the nominal pointing direction of the involved user beam 28. Notably, the nominal beam center target may or may not be used in the beam oscillation but, if it is used, there are corresponding nominal values for beam weights used to form the involved user beam 28. Thus, oscillating any given user beam 28 with respect to different beam center targets 30 in the associated nominal user beam coverage area can be understood as applying different sets of beam weights, each set corresponding to a respective one of the different beam center targets 30. Another view is that oscillating the user beam 28 can be understood as dynamically "modifying" the set of beam weights used to form the user beam 28.

Regardless, using different beam center targets 30 over the beam oscillation cycle means that the signal quality of each involved terminal 24 with respect to the user beam 28 characteristically changes as the different beam center targets 30 are selected. Here, the "involved" terminals 24 shall be understood as being limited to the terminals 24 that are located in the nominal user beam coverage area 26 associated with the user beam 28 in question. In other words, terminals 24 are assigned to user beams 28 based on the locations of the terminals 24 relative to the nominal user beam coverage areas 26, which are fixed, and the serving beam assignments do not change as a function of beam oscillation. The scheduling optimizations at issue exploit the characteristic variations in signal quality experienced by individual ones among the assigned terminals 24 as the user beam 28 to which they are assigned is oscillated.

Although the reference number "30" is used as a generic label in Figure 1 for example beam center targets 30, suffixing is used to call out specific beam center targets 30 of interest for discussion. For example, the beam center target 30a is at the geometric center of the illustrated nominal user beam coverage area 26 and thus corresponds with the nominal beam orientation-nominal pointing direction-for the associated user beam 28.

Now consider the terminals 24 in Figure 1 that are distinguished as terminals 24a, 24b, and 24c. Signal quality for the terminal 24a will, as a general proposition, be better or best when the beam center target 30a is selected, as compared to other ones among the example beam center targets 30. Similarly, the signal quality associated with the terminal 24b will, as a general proposition, be better or best when the beam center target 30b is selected, and the same holds for the terminal 24c with respect to the beam center target 30c.

Here, the terms "better" and "best" may be understood in the relative sense, meaning that the signal quality associated with any given one among the terminals 24 may characteristically improve or worsen as the different beam center targets 30 are selected over a given beam oscillation cycle. Because other factors may affect signal quality, the absolute signal quality experienced by any given terminal 24 at any given instant or over any given duration depends on more than just beam oscillation; however, beam oscillation imparts characteristic, observable variations in signal quality among the plurality of terminals 24 assigned to the user beam 28.

With the signal quality associated with each terminal 24 assigned to the user beam 28 varying characteristically with respect to the different beam center targets 30, the scheduling controller 36 is configured to schedule traffic opportunistically such that capacity is maximized while still honoring fairness requirements for each terminal 24. Regarding "fairness," an allocation of beam capacity across a set of terminals 24 served by a user beam 28 is fair if each terminal 24 gets a precise and appropriate share of that capacity, measured in bytes not symbols. In the simplest sense, an allocation is fair if every terminal 24 gets the same number of bytes. More nuanced definitions of fairness can require that different amounts be allocated to terminals 24 based on concepts such as relative weighting, strict priorities, guaranteed minimum rates, maximum rates, and/or other concepts.

Usually but not always, scheduling in the presence of beam oscillation means that each terminal 24 receives its traffic at times when its signal quality is best or at least better than average. Of course, the scheduling controller 36 in one or more embodiments is configured to honor Quality-of-Service (QoS) considerations, including terminal priority, weight, etc., and to handle degenerate cases, such as where a given user beam 28 serves a single terminal 24, and where traffic for that single terminal 24 may be scheduled in each interval.

In one or more embodiments, the particular forward link user traffic being conveyed at any given instant from the ground segment 16 to the space segment 12 via a feeder uplink 42 depends on the scheduling of forward link traffic by the scheduling controller 36. Additionally, or alternatively, the particular return link user traffic being conveyed at any given instant from the space segment 12 to the ground segment 16 via a feeder downlink 44 depends on the scheduling of return link traffic by the scheduling controller 36. Whether applied in the forward-link or return-link directions, the scheduling controller 36 may be configured to schedule traffic opportunistically such that capacity is maximized while still honoring fairness requirements for each terminal 24.

In the specific case of return link traffic, this approach means that each terminal 24 within the involved population would be scheduled to transmit its return link traffic at times within a beam oscillation cycle when received signal quality at the satellite for the terminal 24 is best or at least better than average. In an example of return-link scheduling, a centrally located scheduling controller 36 determines return-link scheduling and transmits scheduling information for distribution to the terminals 24 being scheduled, so that they know when to transmit on the reverse link.

Figure 3 illustrates an example beam oscillation cycle within a succession of like beam oscillation cycles, where the beam oscillation cycle involves a set of six different beam center targets 30, labeled as beam center targets 30a, 30b, 30c, 30d, 30e, and 30f, for distinction. Keeping in mind that each beam center target 30 is a different location within a nominal user beam coverage area 26, the beam oscillation cycle in this example includes a succession of selection windows, with a particular one of the different beam center targets 30 being the selected target during each beam selection window. The beam selection windows in one or more embodiments or during one or more operating scenarios are of uniform duration, while they are non-uniform in one or more other embodiments or during one or more other operating scenarios. Here, "operating scenario" refers to, for example, different densities and spatial distributions of terminals 24 within the nominal user beam coverage area 26, or different traffic needs among some or all of the terminals 24.

In at least one embodiment, as shown in Figure 4, each beam oscillation cycle spans or encompasses a succession of scheduling intervals 50, with each such succession of scheduling intervals 50 comprising a "scheduling frame" 52. The beam oscillation cycles may be frame aligned, with the beam oscillation cycle repeated for each scheduling frame 52 in a running succession of frames 52. Here, a "scheduling interval" represents the smallest interval on which scheduling decisions are made-i.e., the scheduling controller 36 decides which terminal(s) 24 are served via the involved user beam 28 with respect to each scheduling interval 50.

The duration that a given beam center target 30 is selected may be referred to as the "selection dwell." Selection dwell may be defined in number of scheduling intervals 50, meaning that the minimum selection dwell is one scheduling interval 50. Depending on whether there is an even number of scheduling intervals 50 within a scheduling frame 52, the selection dwells of the beam center targets 30 used in the beam oscillation cycle may or may not be uniform. Further, in one or more embodiments, the selection dwells are predefined, while in one or more other embodiments, the selection dwells are determined dynamically, i.e., during live operation, such as based on the distribution of terminals 24 within the nominal user beam coverage area 26.

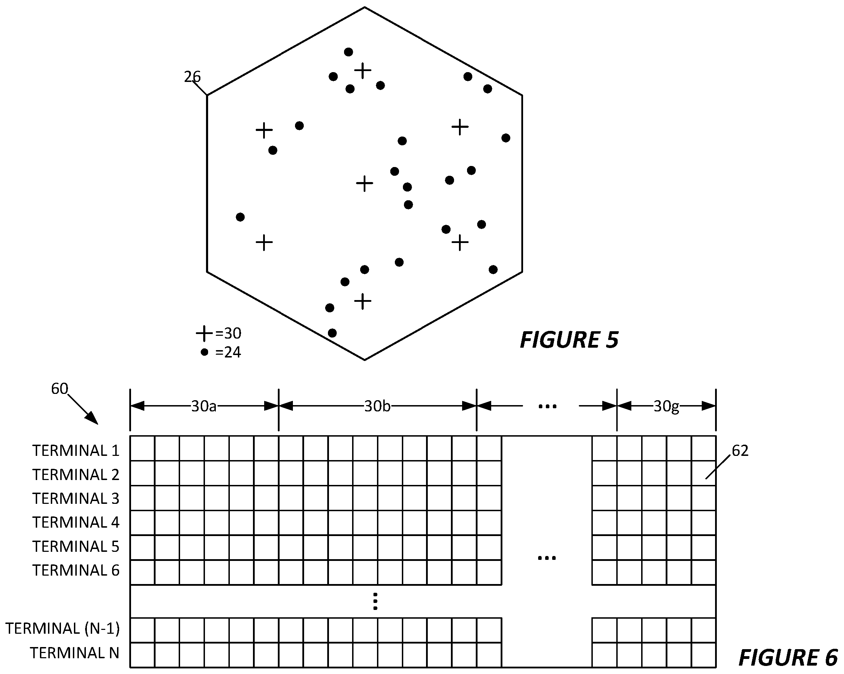

Figure 5 illustrates a simplified example set of seven different beam center targets 30 distributed within a nominal user beam coverage area 26. The distribution may be based on predefined pattern, i.e., the pattern is determined or decided in advance. Here, "pattern" refers to the relative locations of the beam center targets 30 within the nominal user beam coverage area 26. Saying that the pattern is common or the same across multiple nominal user beam coverage areas 26 means that the relative arrangement or placement of beam center targets 30 is the same for all such nominal user beam coverage areas 26. The pattern may be symmetric, for example, or otherwise based on some type of equidistant distribution of the beam center targets 30 within each nominal user beam coverage area 26.

As may be appreciated, a signal-quality metric for each terminal 24 will vary with respect to the different beam center targets 30. The signal-quality metric in this context may be an actual signal quality measure or another value that is reflective of signal quality, such as an error-rate metric or an efficiency metric. In cases where the user beam 28 is a forward user beam for transmissions of user traffic to the terminals 24, the signal-quality metrics reflect received signal quality at the respective terminals 24. In cases where the user beam 28 is a return user beam for transmission of user traffic from the terminals 24, the signal-quality metrics reflect received signal quality in the SCS 10 for the respective terminals 24.

In one or more embodiments, the per-terminal signal-quality metrics for each of the terminals 24 being scheduled on a user beam 28 comprise favorability metric values in a favorability table, such as the favorability table 60 shown in Figure 6. Figure 6 assumes an example of *N* terminals 24 assigned to a given user beam 28. Here, *N* is an integer greater than or equal to one.

The beam oscillation cycle in the depicted example involves seven beam center targets 30, e.g., beam center targets 30a, 30b, ..., 30g. Each column of the favorability table 60 corresponds to one scheduling interval 50 in a succession of scheduling intervals 50 spanned by the beam oscillation cycle, e.g., one scheduling frame 52. Each row of the favorability table 60 corresponds to a respective one of the terminals 24 being scheduled on the involved user beam 28. More generally, because other arrangements may be used, the favorability table 60 should be understood as containing a respective plurality of favorability metric values for each terminal 24 assigned to the user beam 28 in question, with each favorability metric value in that respective plurality corresponding to a respective one among the scheduling intervals 50 within the scheduling frame 52. With respect to carrying out such operations for multiple user beams 28, there will be a favorability table 60 for the group of terminals 24 assigned to each such beam.

Each row/column intersection in the example favorability table 60 is a cell 62, with the data value held in each cell 62 being a particular value of the favorability metric for the corresponding terminal 24 in the corresponding scheduling interval 50. For example, if the favorability metric is SINR, each cell 62 holds a corresponding SINR value, e.g., a numeric value within the applicable number space or range.

For a given terminal 24 assigned to a given user beam 28, the favorability metric value of the given terminal 24 in any given scheduling interval 50 depends on which beam center target 30 is selected for the given user beam 28 for that given scheduling interval 50. In one or more embodiments, the favorability metric values may also depend on other factors unrelated to beam oscillation, such as time-varying interference or time-varying gain due to satellite and/or SAN fluctuations. Also, as suggested in the illustration, the selection dwell used for each beam center target 30 may be defined in number of scheduling intervals 50.

In one or more embodiments, each beam center target 30 is selected only once during each beam oscillation cycle-i.e., there is one selection window for each beam center target 30, and each selection window has a duration-a selection dwell-of at least one scheduling interval 50. If a selection window is longer than one scheduling interval 50 in such embodiments, it spans consecutive scheduling intervals 50. However, in other embodiments, one or more of the beam center targets 30 may be selected more than once during a beam oscillation cycle, and the selections may be non-contiguous-e.g., separated by one or more scheduling intervals 50. This approach may be understood as interleaved or alternating selection of beam center targets 30 over the succession of scheduling intervals 50 spanned by the beam oscillation cycle. With such approaches, to the extent that any given beam center target 30 is selected more often or for a longer aggregate duration than another given beam center target 30 within one beam oscillation cycle, it may be regarded as having a higher duty cycle than the other beam center target 30. In at least one such embodiment, the duty cycles of the different beam center targets 30 within a given nominal user beam coverage area 26 are determined dynamically, e.g., based on the distribution of terminals 24 within the nominal user beam coverage area 26 and/or the respective traffic needs or service types of those terminals 24.

In any case, at any given time, one or more terminals 24 within a nominal user beam coverage area 26 will have better favorability metric values as compared to one or more other terminals 24 within that area, in dependence on which beam center target 30 is in use during that selection window. In particular, the signal-to-noise-plus-interference (SINR) or other signal-quality metric of each terminal 24 will vary characteristically with respect to the different beam center targets 30 in dependence on the location of the terminal 24 relative to each such target.

By operation of the scheduling controller 36, data packets-traffic-are scheduled opportunistically for each terminal 24 such that they are transmitted generally on the recurring scheduling intervals 50 when there is good SINR for the terminal 24, but occasionally on any or all scheduling intervals 50, so that peak burst speeds are preserved. Here, any scheduling interval 50 may be understood as "recurring" in the sense that each scheduling frame 52 in a succession of frames 52 includes a uniform set of scheduling intervals 50, such that each particular scheduling interval 50 may be considered to recur on a frame-by-frame basis.

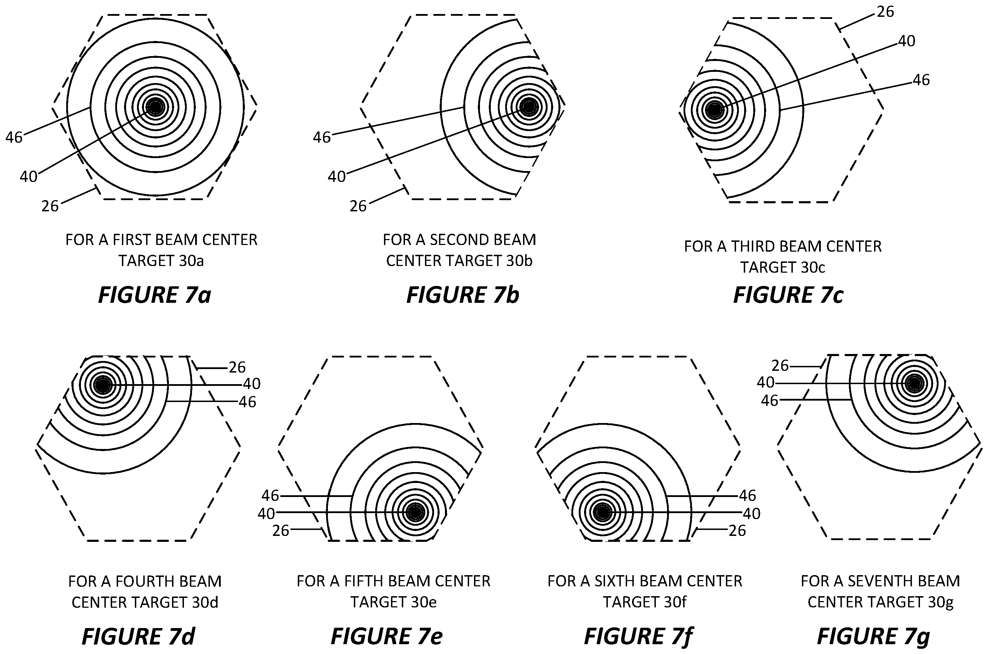

Figures 7a-7g illustrate an example beam oscillation cycle with respect to a nominal user beam coverage area 26, based on the beam oscillation cycle using seven different beam center targets 30. To "use" the different beam center targets 30, the SCS 10 adjusts its beamforming over the beam oscillation cycle so that a beam center 40 of a user beam 28 used to illuminate the nominal user beam coverage 26 shifts from one beam center target 30 to the next, dwelling continuously or in an aggregate sense at each such target for a defined portion of the beam oscillation cycle. The concentric circles 46 depicted in the diagram represent beam gradient lines. For a forward-link beam, the gradient lines represent beam strength, with beam strength decreasing with distance away from the beam center 40. For a return-link user beam, the gradient lines represent receive sensitivity, with sensitivity decreasing with distance away from the beam center 40. Note that the positions of the beam center targets 30 and the suggested order or sequence of target selection is merely one example-other configurations may be used for a beam oscillation cycle.

Although Figures 7b-7g do not illustrate the portions of the user beam 28 that extend beyond the fixed boundary of the nominal user beam coverage area 26, it should be understood that the omitted portions of the user beam 28 exist and may illuminate one or more adjacent nominal user beam coverage areas 26. In other words, the shape and size of the beam footprint of the user beam 28 may remain constant or substantially so as the user beam 28 is oscillated. As such, the user beam 28 may partially illuminate one or more adjacent nominal user beam coverage areas 26 when the selected beam center target 30 is not the geographic center of the nominal user beam coverage area 26 with which the user beam 28 is associated. However, consider a case where there is a plurality of contiguous nominal user beam coverage areas 26, each having an associated user beam 28, and each having the same shape and size, and each having a like pattern of beam center targets 30 within it. In this case, oscillation-related inter-beam interference may be minimized by applying a beam oscillation cycle commonly to the plurality of contiguous nominal user beam coverage areas 26. Doing so means that the same beam center targets 30 are selected at the same times and in the same sequence across the plurality of contiguous nominal user beam coverage areas 26. Correspondingly, the plurality of associated user beams 28 all shift by the same amount and in the same direction with each new target selection. Of course, because selecting different beam center targets 30 for a given user beam 28 may be based on using different beamforming solutions-different beam weight values-there may be some variation in beam shape or beam footprint during the beam oscillation cycle.

As for deciding terminal scheduling over the plurality of scheduling intervals 50 spanned by a beam oscillation cycle, there are many mathematical or algorithmic approaches for determining the scheduling solution. Broadly, the scheduling problem for a given plurality of terminals 24 assigned to a given user beam 28 may be understood as scheduling respective ones among the given plurality terminals 24 over any given succession of scheduling intervals 50, e.g., a scheduling frame 52. The scheduling goal for the scheduling frame 52 is, for example, maximizing a total capacity of the given user beam 28. Maximizing the total capacity of the given user beam 28 comprises, for example, solving a constrained optimization problem with respect to the succession of scheduling intervals 50. For example, solving the constrained optimization problem maximizes capacity of the user beam 28 under the constraint that service fairness among the plurality of terminals 24 is maintained. Of course, the scheduling problem may be extended in joint fashion to multiple pluralities of terminals 24 in adjacent nominal user beam coverage areas 26.

With respect to solving the scheduling problem, linear programming yields an optimal solution, while greedy algorithms provide sub-optimal solutions with the advantage of reduced complexity. Another set of approaches may be understood as one or more types of "biasing algorithms" that have a superior time complexity as compared to linear programming but still yield near-optimal solutions. Reduced computation time has distinct advantages in contexts where the scheduling solution must be generated on the order of milliseconds or less.

To appreciate the various approaches to biasing, first consider making scheduling decisions for a plurality of terminals 24 assigned to a given user beam 28, with respect to one scheduling frame 52 comprising a succession of scheduling intervals 50. Making the scheduling decisions means deciding which terminals 24 are served in which scheduling intervals 50 of the scheduling frame 52, and those decisions depend on the relative scheduling attractiveness of each terminal 24 with respect to each scheduling interval 50. With respect to any given scheduling interval 50, a terminal 24 with a better favorability metric value is more attractive for scheduling in that interval than a terminal 24 with a poorer favorability metric value. Here, "better" and "poorer" have relative meaning, such as where the favorability metric is signal quality and one terminal 24 has a higher signal quality estimate for the interval than another terminal for that same interval.

Thus, the scheduling decisions may be made directly on the favorability metric values, such as by comparison, ranking, etc. However, in one or more embodiments, the scheduling decisions are made according to biased favorability metric values, rather than the "raw" favorability metric values, where the biases are computed iteratively or via other means. With this approach, the favorability metric values of the terminals 24 are biased according to respective scheduling bias values to obtain biased favorability metric values, which are used to make the scheduling decisions.

According to a first version of an example biasing algorithm, the scheduling bias values are per-terminal scheduling bias values. For any given scheduling frame 52 being scheduled, each terminal 24 is assigned a corresponding scheduling bias value, and that corresponding scheduling bias value is used to bias the corresponding per-interval favorability metric values of the terminal 24. The per-terminal scheduling bias values may be updated on a recurring basis, such as with respect to each scheduling frame 52 and/or iteratively within each scheduling frame 52. According to a second version, the scheduling bias values are per-interval scheduling bias values. For any given scheduling frame 52 being scheduled, each scheduling interval 50 within the scheduling frame 52 is assigned a corresponding scheduling bias value. In at least one such embodiment, the per-interval biases may be updated iteratively with respect to the frame being scheduled, e.g., to balance utilization of the respective scheduling intervals 50 over the scheduling frame 52.

Thus, according to the second version, the plurality of favorability metric values in each scheduling interval 50 are biased according to the scheduling bias value assigned to that scheduling interval 50. The per-interval scheduling bias values may be updated on a recurring basis, such as with respect to each scheduling frame 52. In either version, the scheduling bias values are decided based on, for example, Quality-of-Service (QoS) needs, relative differences in prevailing radio conditions, etc.

Consider a simple biasing example that assumes a nominal user beam coverage area 26 that has two beam center targets: A on the left and B on the right. Each target is selected for one scheduling interval, then the scheduling frame repeats. Also, assume that there are two terminals X and Y assigned to the user beam 28 that is associated with the nominal user beam coverage area 26. Both such terminals are to the left of A, but X is farther to the left. An example fairness goal is that each terminal gets one scheduling interval within the two-interval scheduling frames.

Now first consider the per-terminal biasing version, where the unbiased favorability metrics F are as follows: Fya = 6, Fxa = 5, Fyb = 4, Fxb = 1. According to the raw favorability metrics (no biases), A prefers Y over X and so does B. If the scheduling controller logic stops here, Y gets scheduled on both intervals and X gets starved. Instead, in the context of this simplified example, the scheduling controller 36 increases the bias of X by 1 and decreases the bias of Y by one. The new biased favorability metrics are Fya = 5, Fxa = 6, Fyb = 3, Fxb = 2. Now A prefers X but B still prefers Y. So each terminal gets one full scheduling interval.

Now consider the per-interval biasing version. Assume that the unbiased favorability metrics F are as follows: Fya = 6, Fxa = 4, Fyb = 5, Fxb = 1. According to the raw favorability metrics (no biases), Y prefers A over B and so does X. Again, if the scheduling logic stops here, A gets used by both terminals and B gets unused. Instead, the scheduling controller 36 increases the bias of B by 1 and decreases the bias of A by one. The new biased favorability metrics are Fya = 5, Fxa = 3, Fyb = 6, Fxb = 2. Now Y prefers B but X still prefers A. So both intervals get one user.

Of course, these foregoing examples are simplified by the use of rank-ordering and not efficiencies. Efficiency-based scheduling affords more nuance. Although per-terminal biasing may appear to yield the same results as per-interval biasing. In practice there is at least one reason the interval-biasing approach may be more useful. For any given scheduling frame N+1, the SCS 10 can significantly speed up computation time by seeding the scheduling optimizer with the bias values computed for frame N. This works based on dealing with the same set of bias values each time, and with the number of scheduling intervals per frame being the same. However, the number of terminals 24 being scheduled for the involved user beam 28 can vary.

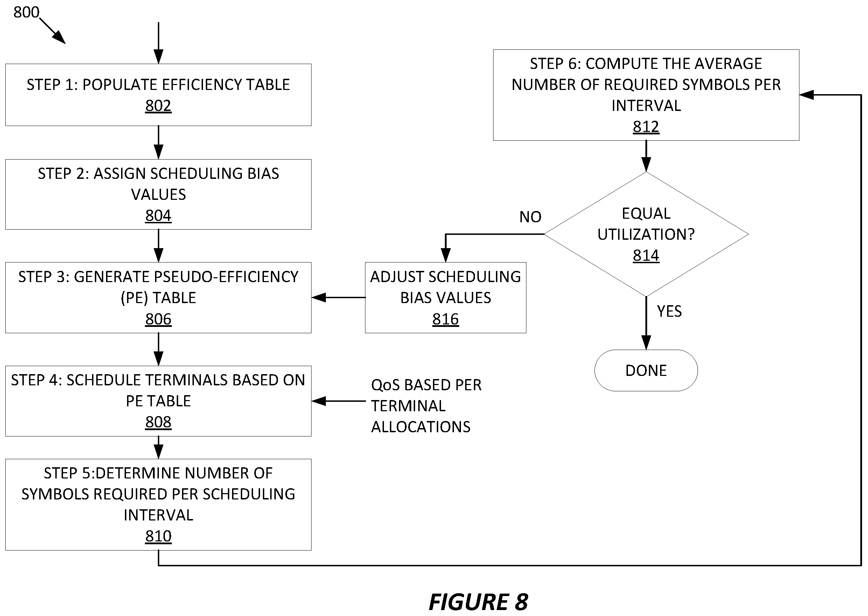

Figure 8 illustrates an example method 800 performed by a scheduling controller 36 with respect to a scheduling frame 52 comprising a succession of scheduling intervals 50. The scheduling frame 52 also may be referred to as a scheduling epoch and represents one beam oscillation cycle. The method operations can be understood as an example implementation of the second version of the biasing algorithm described above, wherein the scheduling attractiveness of respective terminals 24 in each scheduling interval 50 within the scheduling epoch depends upon the favorability metric value of each terminal 24 in the scheduling interval 50 and on a respective bias value assigned to each scheduling interval 50.

Scheduling operations begin with Step 1, which includes populating an "efficiency table" (Block 802). Each terminal 24 assigned to the user beam 28 has an efficiency in bits-per-symbol for each scheduling interval 50. This value is stored in an efficiency table such that the efficiency values may be understood as one example of the favorability metric values discussed herein. In other words, scheduling controller 36 may maintain an efficiency table as a specific example realization of the aforementioned favorability table 60, where each efficiency value in the efficiency table represents the efficiency of a particular terminal 24 in a particular scheduling interval 50. In an example arrangement, then, each column of the efficiency table represents a respective scheduling interval 50 within a scheduling frame 52 and each row of the efficiency table represents a particular terminal 24 among the terminals 24 assigned to the involved user beam 28.

The efficiency of each terminal 24 in each scheduling interval 50 depends on the beam center target 30 associated with that scheduling interval 50. In one or more embodiments, the efficiency values held in the efficiency table are maintained based on feedback returned to the SCS 10 from respective ones of the terminals 24. For example, the terminals 24 may be configured to measure SINR on the forward link and periodically return such measurements or related channel state information (CSI) to the SCS 10, with the channel estimator 38 using such information to populate the efficiency table. Thus, when scheduling a given scheduling frame 52, the efficiency of each terminal 24 for each scheduling interval 50 may be based on the most current relevant CSI, where "relevant" refers to the terminal 24 at issue and the beam center target 30 that is associated with the scheduling interval 50. The efficiency of a terminal 24 may be measured or estimated.

Processing continues with Step 2, which includes assigning a respective scheduling bias value to each scheduling interval 24 (Block 804). The scheduling bias values may be initialized to zero or based on values from a previous scheduling iteration. In this example context, the term "scheduling bias value" functions as an adjustment in the tendency that bytes for any terminal 24 will be allocated to the corresponding scheduling interval 50 associated with that scheduling bias value. Increasing the scheduling bias value for a given scheduling interval 50 increases this tendency relative to other scheduling intervals 50, while decreasing the scheduling bias value decreases this tendency relative to other scheduling intervals 50.

At Step 3, the scheduling controller 36 generates a pseudo-efficiency (PE) table. Here, the scheduling controller 36 maintains the PE table based on the efficiency table and the respective scheduling bias values. For example, with the understanding that each value in the efficiency table corresponds to a particular terminal 24 in a particular scheduling interval 50, the corresponding PE value in the PE table may be obtained by modifying the efficiency value from the efficiency table based on the scheduling bias value that is assigned to that particular scheduling interval 50. In one example, the scheduling bias value is added. In another example, the scheduling bias value is a scalar value used as a multiplier, such as a value between zero and one. Broadly, it shall be understood that the scheduling bias values modify or adjust the efficiency values, as a mechanism to moderate or otherwise bias the efficiency-based scheduling driven by the efficiency table.

According to QoS-based per terminal allocations, each terminal 24 has a fixed number of bytes that need to be transmitted. Hence, at Step 4 (Block 808), for each terminal 24, the scheduling controller 36 compares the PE of all scheduling intervals 50 and tentatively distributes the bytes to be transmitted for the terminal 24 across the scheduling intervals 50, based on their respective PEs. The tentative allocation may be finalized via further iterative processing. Overall, the approach means that the required bytes for each terminal 24 are distributed across those scheduling intervals 50 with the highest PEs for that terminal 24. Scheduling intervals 50 with low PEs for the terminal 24 get no bytes for that terminal 24 and instead gets bytes associated with one or more other terminals 24 that have relatively better PEs for those scheduling intervals 50.

At Step 5 (Block 810), for each scheduling interval 50, the number of symbols required is based on the bytes associated with each terminal from Step 4 and the efficiency of the terminal 24 for the interval, not the PE of the terminal 24 for the interval. That is, while the scheduling interval(s) 50 selected for serving each terminal 24 are based on the respective PEs among the scheduling intervals 50, the per-scheduling interval symbol requirements are based on the corresponding actual efficiencies of the scheduled terminals 24. With this approach, the byte allocation for a terminal 24 is computed by fairly dividing the total estimated capacity across the assigned terminals 24 in a fair way. The efficiency of each terminal characteristically relates to the distance between the terminal and each beam center target 30, along with other factors like beam pointing accuracy, weather, etc. The symbols S required for transmitting B bytes given a bits-per-symbol efficiency of E is: S = B*8/E.

Step 6 (Block 812) includes computing the average utilization per scheduling interval, which provides a basis for the scheduling controller 36 to assess whether each scheduling interval 50 is equally utilized - where utilization is computed for each scheduling interval as the number of symbols required of that scheduling interval divided by the number of symbols available for that scheduling interval. If not ("NO" from Block 814), the scheduling controller 36 adjusts the per-interval scheduling bias values (Block 816) and repeats Steps 3-6 and then reevaluates the utilization. Upon reaching an equal utilization ("YES" from Block 814), the current run of the scheduling algorithm ends. Adjusting the scheduling bias values comprises, for example, reducing the scheduling bias values of one or more scheduling intervals 50 that are over-utilized for the scheduling frame 52 relative to the computed average utilization of all the scheduling intervals and increasing the scheduling bias values of one or more scheduling intervals that are under-utilized for the scheduling frame 52 relative to the average. That is, the scheduling controller 36 reduces the bias value for a scheduling interval 50 that is over-utilized so in the next iteration fewer terminals 24 prefer it, so it becomes less utilized.

Equal utilization may be defined within some tolerance, such that under-utilization or over-utilization relative to average utilization may be tolerated to at least some extent. Increasing this tolerance allows the algorithm to terminate sooner and require fewer iterations. As an example tolerance suitable in one or more implementations, the SCS 10 uses a plus/minus five percent tolerance (+/- *5*%). Of course, greater or lesser tolerances may be used, depending upon performance goals.

The following is an example approach to adjusting the scheduling bias values in a scenario where the scheduling bias values are assigned to the scheduling intervals 50 within a scheduling frame 52-i.e., per-interval biasing is used. Example adjustment steps include:
Step 1: B[t, s] is the byte allocation for terminal t on scheduling interval s for the current iteration of the scheduling algorithm as applied to the scheduling frame 52 being scheduled.
Step 2: Compute the total number of symbols required for each scheduling interval: A[s] = sum(B[t, s]*8/Eff[t, s] for all t). Where Eff[t, s] is the efficiency in bits-per-symbol for terminal t on scheduling interval s.
Step 3: Compute the utilization of each scheduling interval: U[s] = A[s]/C[s] where C[s] is the capacity of the scheduling interval s in symbols.
Step 4: Compute the mean utilization: M = sum(U[s] for all s)/N, where N is the number of scheduling intervals.
Step 5: Compute utilization fairness fraction for each scheduling interval: F[s] = U[s]/M.
Step 6: Compute the new scheduling bias value for each scheduling interval; Biasnew[s] = Biasprevious[s] + loop_gain * (1 - F[s]).
Note that a maximum increment / decrement size in step 5 immediately above can be used. Also, a variable loop gain helps convergence. For example, if after an iteration, scheduling intervals are more similarly utilized, increase the loop gain by a small percent. If scheduling intervals are less similarly utilized, halve the loop gain.

Regardless of the above possible variations or modifications of the method 800, in an example embodiment, the processing operations referred to as the method 800 result in the outputting of a byte table corresponding to the scheduling frame 52. In a forward link example context, the byte table indicates the number of bytes to be transmitted by the SCS 10 in each scheduling interval 50 for each terminal 24. The byte table has the same dimensions as the efficiency table.

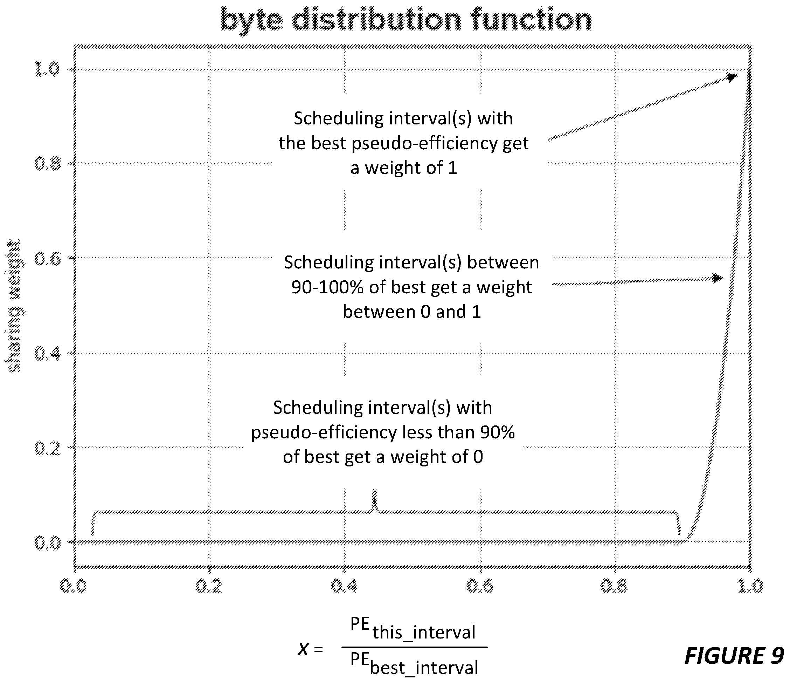

Figure 9 illustrates one approach to distributing the required bytes for each terminal 24 within any given scheduling frame 52 being scheduled. A sharing weight is assigned independently for each terminal 24, for each scheduling interval 50 among the succession of scheduling intervals 50 belonging to the scheduling frame 52. Correspondingly, the bytes for the terminal 24 are allocated to the scheduling intervals 50 in proportion to the respective sharing weights. Independently for each terminal 24, the sharing weight of each scheduling interval 50 is computed by comparing the PE of the terminal 24 for that scheduling interval 50 to the PE of the best scheduling interval 50 for that terminal 24. Figure 9 indicates the computation of the sharing weight "x" for a given scheduling interval 50 on this basis. Note that a sharing weight is not related to any QoS weighting assigned to the traffic associated with any terminal 24. Also notable, making the illustrated function curve steeper and further to the right creates solutions closer to optimal but makes convergence more difficult.

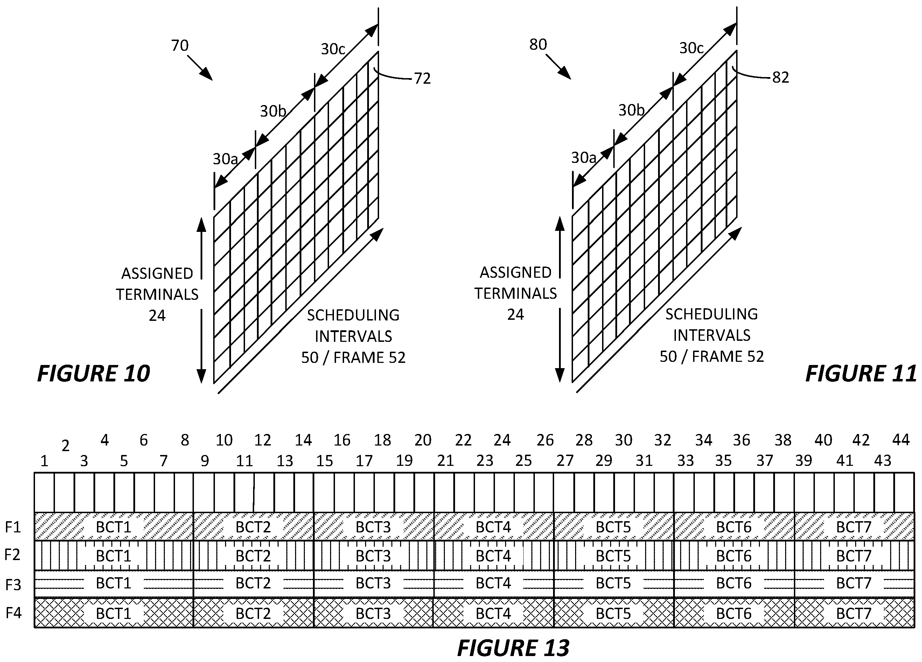

Figure 10 illustrates an example efficiency table 70 as used in the method 800, with the simplification that only three different beam center targets 30a, 30b, and 30c are assumed, rather than seven. The assigned terminals 24 are those terminals assigned to the user beam 28 in question and being scheduled with respect to a scheduling frame 52. The number of terminals 24, the number of scheduling intervals 50, and the number of beam center targets 30 suggested for the efficiency table 70 are all non-limiting examples and in practice are set as needed.

Each cell 72 of the efficiency table 70 holds a value expressing the efficiency of the corresponding terminal 24 for the corresponding scheduling interval 50, with the efficiency value being numeric and expressing efficiency as bits per symbol, for example. Regardless, the table 70 reflects the variations in the signal quality associated with each terminal 24 with respect to the different beam center targets 30 used over the succession of scheduling intervals 50. For example, a given terminal 24 that is closest to the beam center target 30a may be expected to have a characteristically higher efficiency in those scheduling intervals 50 where the associated user beam 28 is focused on the beam center target 30a, as compared to the scheduling intervals 50 where the associated user beam 28 is focused on the beam center target 30b or 30c. Of course, it should be appreciated that two or more beam center targets 30 may be associated with at least a threshold level of signal quality for a given terminal 24, and the scheduling controller 36 may thus be able to schedule the given terminal in scheduling intervals 50 associated with more than one beam center target 30. Additionally, if there are more beam center targets 30 for a nominal user beam coverage area 26 than there are terminals 24 served by the user beam 28 associated with the nominal user beam coverage area 26, a terminal 24 is likely to be scheduled with respect to more than one beam center target 30.

In the context of the method 800, each scheduling interval 50 has an associated scheduling bias value, which may be expressed in the same numeric domain as the efficiency values. With the efficiency table 70 holding a row of efficiency values for each terminal 24, generation of the PE table used in the method 800 is based on adding the scheduling bias value assigned to each scheduling interval 50 to the corresponding column of per-terminal efficiency values for the scheduling interval. Figure 11 illustrates a PE table 80 corresponding to the efficiency table 70 in Figure 10. As with Figure 10, each column in the table corresponds to a respective scheduling interval 50 within the scheduling frame 52 being scheduled. However, each cell 82 of the PE table 80 is the corresponding efficiency value from the efficiency table 70, adjusted by the scheduling bias value of the corresponding scheduling interval 50-i.e., each cell 82 holds a PE, which is a biased efficiency value. One or more embodiments of the scheduling technique decide which terminals 24 are served in which scheduling intervals 50 within a scheduling frame 52 based on the PE table 80. Of course, the disclosed techniques are not limited to use of the PE table 80. Further, the efficiency table 70 stands as an example realization of the favorability table 60. In one or more other embodiments, the favorability table 60 contains per-terminal SINR estimates or another metric value that relates to signal quality and reflects the characteristic signal quality variations arising from beam oscillation.

A further consideration regarding scheduling involves broadcast traffic and multi-cast traffic. Bytes carrying broadcast traffic intended for all terminals 24 assigned to a user beam 28 generally should end up being transmitted in scheduling intervals 50 where signal quality is sufficient for all such terminals 24. For example, a particular beam center target 30 among the different beam center targets 30 used in the beam oscillation cycle may be at or near the center/centroid of the nominal user beam coverage area 26, with selection of that beam center target 30 providing sufficient signal quality to all terminals 24.

Thus, the scheduling controller 36 may adjust its scheduling such that broadcast traffic is sent during the selection window corresponding to that particular beam center target 30. More generally, two or more of the beam center targets 30 used in a beam oscillation cycle may provide sufficient-threshold level-signal quality for all terminals 24 assigned to the user beam 28, meaning that broadcast traffic may be sent during the selection windows corresponding to one or more such beam center targets 30. Similar logic may be adopted by the scheduling controller 36 with respect to multicast or group traffic-i.e., such traffic is scheduled or at least biased towards being scheduled during scheduling intervals 50 that fall within the selection window(s) of one or more beam center targets 30 that provide the targeted group of terminals 24 with at least a threshold level of signal quality.

The scheduling controller 36 may be informed of which scheduling intervals 50 correspond to selection of a beam center target 30 that is preferred or designated for certain types of traffic, with the scheduling controller 36 then prioritizing the scheduling of such traffic in such scheduling intervals 50. In an alternative approach, for scheduling a multicast or broadcast flow within a scheduling frame 52, the scheduling controller 36 finds, for each scheduling interval 50 within the scheduling frame 52, the lowest efficiency (bits per symbol) of all the terminals 24 belonging to the flow. The scheduling controller 36 treats these per-interval worst-case efficiencies as the efficiencies for that flow and finds the best scheduling intervals 50 for the flow. Such scheduling intervals 50 generally will be the intervals associated with those beam center targets 30 that are located closer to the center of the nominal user beam coverage area 26, assuming that the nominal user beam coverage area 26 is symmetric.

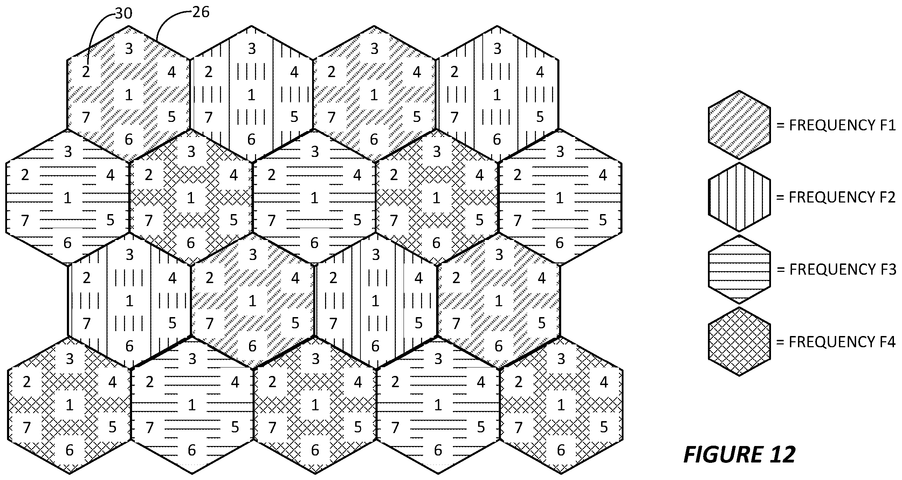

The SCS 10 may provide service over a larger satellite service area that is subdivided into a plurality of nominal user beam coverage areas 26, such as shown in Figure 12. With respect to the user beam 28 associated with any particular nominal user beam coverage area 26, the adjacent nominal user beam coverage areas 26 are served using user beams 28 on different radio frequencies, which can be regarded as different "colors" in a frequency reuse map. Figure 12 assumes four different frequencies, F1, F2, F3, and F4. The SCS 10 uses a set of seven different beam center targets 30 per nominal user beam coverage area 26 and the spatial arrangement of these targets may be common across all areas-e.g., the same pattern of beam center targets 1 through 7 is reused in all nominal user beam coverage areas 26. As such, the SCS 10 may apply a common beam oscillation cycle across all nominal user beam coverage areas 26, such that the same relative beam center target 30 is selected in each nominal user beam coverage area 26 in each step or phase of the beam oscillation cycle. Again, for this commonality of beam oscillation to work, all nominal user beam coverage areas 26 involved in the common oscillation have the same number and relative spatial distribution of beam center targets 30 and the selection of different beam center targets 30 is synchronized across the plurality of nominal user beam coverage areas 26, following the same selection sequence and selection dwells in all nominal user beam coverage areas 26.

For example, a beam oscillation cycle commonly applied across the plurality of nominal user beam coverage areas 26 includes selecting the beam center targets 30 that are labeled "1" in the diagram for a defined selection dwell, then selecting the beam center targets 30 that are labeled "2" in the diagram, and so on. At a minimum, user beams 28 on the same frequency channel will use the identical or similar set of beam center targets 30 in the corresponding nominal user beam coverage areas 26 and follow identical or similar spatial beam-center target selection sequences, to minimize inter-beam interference.

Figure 13 continues with the four-color reuse introduced in Figure 12, where forty-four scheduling intervals 50 are included in the scheduling frame 52 being scheduled and are grouped into six 6-interval selection windows and one 8-interval selection window. Each selection window corresponds to the SCS 10 using the same relative beam center target 30 across all nominal user beam coverage areas 26. Thus, going from left to right in the diagram, there is a first selection window spanning scheduling intervals 1-8, during which target 1 is selected in all nominal user beam coverage areas 26. During the second selection window, which spans timeslots 9-14, target 2 is selected in all nominal user beam coverage areas 26, and so on. This coordinated approach across a plurality of nominal user beam coverage areas 26 maintains maximal spacing between user beams 28 of the same frequency, despite the SCS 10 essentially shifting such beams relative to the fixed nominal user beam coverage areas 26, based on changing the beam center targets 30 at which they are aimed.

Effectively, with this technique, the SCS 10 employs a reuse factor of 4 x 7 = 28 (four beam frequencies, with seven beam center targets 30 for each user beam 28). In other words, the SCS 10 may be regarded in this example as having seven different sets of user beams 28, with each set corresponding to a particular beam center target selection and, and with the different sets offering differing signal quality with respect to individual terminals 24 within the corresponding nominal user beam coverage areas 26. Correspondingly, the scheduling logic of the SCS 10 exploits these differences to schedule individual ones among the terminals 24 opportunistically at times of better signal quality, with those times of better signal quality reoccurring deterministically over successive repetitions of the beam oscillation cycle. By operating in this manner, the SCS 10 in this example context approaches the capacity of system with a reuse factor of 28, while maintaining the peak user burst speeds of a system with a reuse factor of 4.

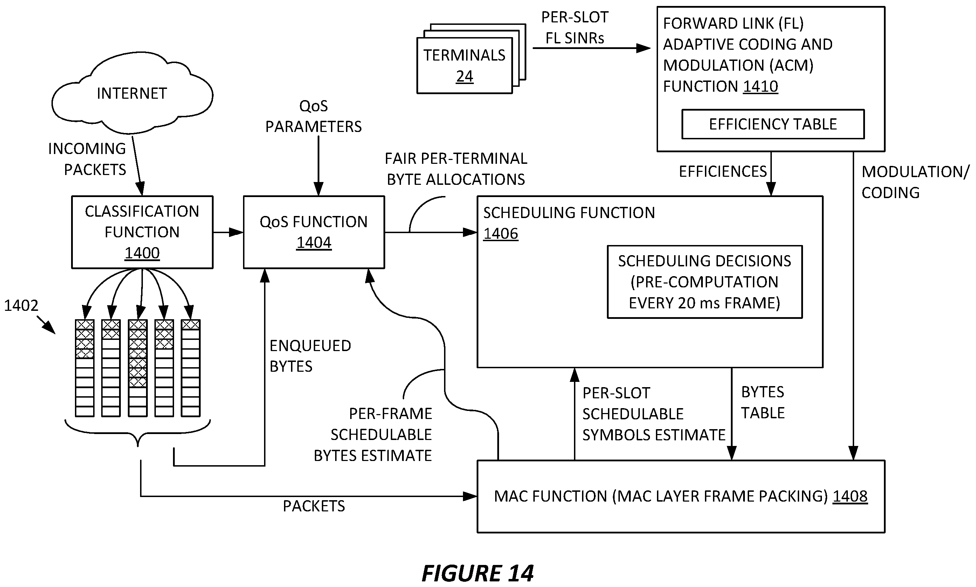

Figure 14 illustrates example functional blocks and related operations in the SCS 10 for terminal scheduling in dependence on the beam oscillation cycle techniques disclosed herein, with the example assuming the forward link (FL) direction. In an example embodiment, all such functional blocks are realized via processing circuitry of the CPS 20 in the ground, e.g., via part of the processing circuitry 39 introduced in Figure 1.

A classification function 1400 classifies packets incoming from the Internet for the various terminals 24, with these packets thus being FL user traffic. A plurality of transmit queues 1402 buffer respective packet flows for individual ones among the population of terminals 24 served by the SCS 10. A QoS function 1404 provides QoS-related scheduling requirements or, in another embodiment, fair per-terminal byte allocations based on QoS-relating scheduling requirements, responsive to QoS parameters associated with the incoming packets. The scheduling function 1406 represents operations of the scheduling controller 36, such as the example set of operations set out in the method 800. Further referring to the method 800, the QoS-related output from the QoS function 1404 can be understood as an example of the QoS allocation information input to Block 808 depicted in Figure 8. Basically, the QoS function 1404 determines how many bytes each terminal 24 gets in a given scheduling frame 52 such that a) the allocations are fair based on QoS and b) the sum of the bytes across all terminals 24 exactly equals the estimated capacity of the involved user beam 28 for one scheduling frame.

The scheduling function 1406 makes scheduling decisions on frame-by-frame basis, for example, where each scheduling frame 52 has a predefined duration, such as 20 milliseconds. With this approach, for any given scheduling frame 52, the scheduling function 1406 makes scheduling decisions for the next occurring frame.

With respect to any particular plurality of terminals 24 assigned to a particular user beam 28, the scheduling decisions are output in the form of a bytes table. The bytes table indicates the per interval byte allocations made for the plurality of terminals 24 for the next frame, and a Medium Access Control (MAC) function 1408 performs MAC-layer frame packing operations for the next frame according to the bytes table. Here, "frame packing" generally refers to the mechanism of taking internet packets out of the scheduling queues and packing them into MAC-layer frames, which then go on to get processed (encoded, modulated, etc.) by the PHY layer. Such operations may be performed in parallel or jointly for respective pluralities of terminals 24 assigned to respective user beams 28 corresponding to respective ones among a plurality of nominal user beam coverage areas 26 that subdivide a larger satellite service area.

Inputs to the scheduling decisions include, in addition to the aforementioned QoS-related scheduling requirements or weightings, per-terminal signal-quality metrics that vary with respect to the different beam center targets 30 used over the beam oscillation cycle. For example, a forward-link (FL) adaptive coding and modulation (ACM) function 1410 receives per scheduling interval SINRs from population of terminals 24 and uses those per-slot SINRs to determine per-terminal efficiencies with respect to the applicable beam center targets-i.e., within the population of terminals 24, different groups or subsets of terminals 24 are associated with the different user beam coverage areas 26, with each such user beam coverage area 26 having an associated set of beam center targets 30.

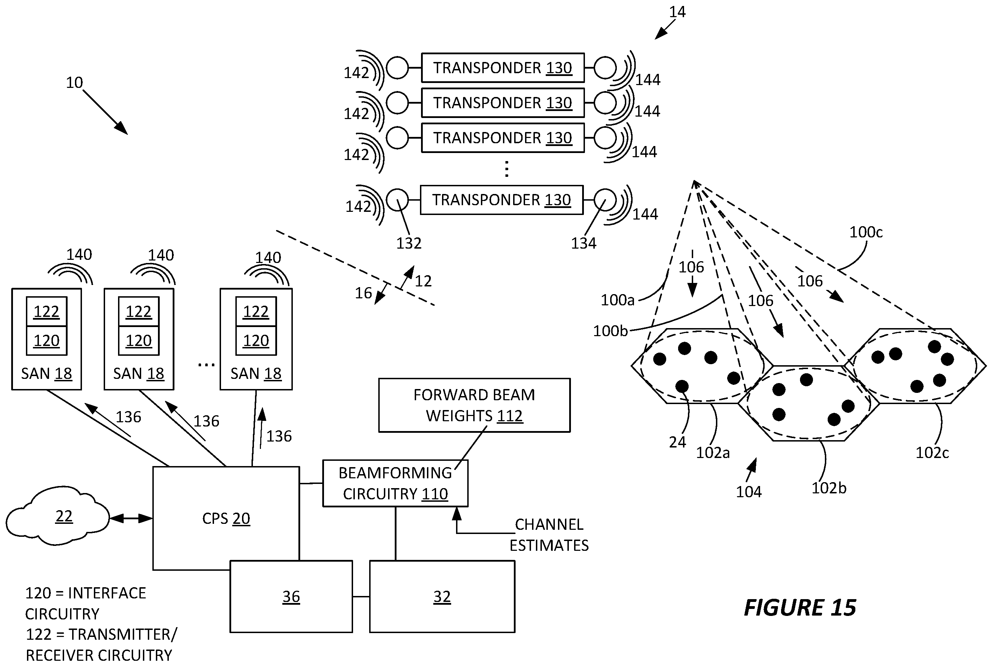

Figure 15 illustrates the SCS 10 according to an example embodiment that assumes beamforming in the forward direction and the corresponding use of beam oscillation cycles for oscillating a plurality of forward user beams 100 in unison. While only three forward user beams 100a, 100b, and 100c are shown for simplicity, there may be a large plurality of forward user beams 100, each associated with a nominal user beam coverage area 102 within a larger satellite service area 104. Each forward user beam 100 carries forward user traffic 106 for individual terminals 24 assigned to the forward user beam 100. Beamforming in the context of Figure 15 relies on a technique referred to as "end-to-end beamforming," with end-to-end beamforming being one approach to ground-based beamforming (GBBF). See U.S. Patent No. 10,128,939 B2 for exemplary details regarding end-to-end beamforming. For other examples of GBBF with the use of optical feeder links between the ground segment 16 and the space segment 12, see U.S. Patent No. 10,454,570 B2 and 10,735,089 B2. The techniques disclosed herein apply to all such contexts.

In addition to the ground-segment details carried over from Figure 1, Figure 15 provides explicit illustration of beamforming circuitry 110, as an example of the beamformer 34 introduced in Figure 1. Here, the beamforming controller 32 computes the respective sets of forward beam weights 112 used to form the respective forward user beams 100, with the beamforming circuitry 110 applying those weights. The weights may be computed based on channel estimates of the end-to-end propagation channels going from each SAN 18 to each terminal 24 via the satellite 14. More particularly, one or more respective terminals 24 located at or very near each beam center target 30 provide CSI that allows the beamforming circuitry 110 to compute a set of forward beam weights 112, the application of which result in formation of a corresponding user beam 100 that is substantially centered on that beam center target 30.

Although Figure 15 does not illustrate the different beam center targets 30 within each nominal forward user beam coverage area 102, it shall be understood that a like set of different beam center targets 30 is used in each nominal forward user beam coverage area 102, and that the SCS 10 uses a common beam oscillation cycle for sequentially selecting such targets across the plurality of forward user beams 100. Assume, for example, that there is a like arrangement of seven beam center targets 30 in each nominal forward user beam coverage area 102. In that case, for each forward user beam 100, there are seven sets of forward beam weights 112 associated with each forward user beam 100, with each such set corresponding to one of the seven beam center targets 30 within the associated nominal forward user beam coverage area 102.

Each SAN 18 includes interface circuitry 120 for communicating with the CPS 20, in the forward and return directions. The interface circuitry 120 includes circuitry configured for physical-layer signal reception and transmission via a wired or wireless medium and may include higher-layer circuitry for protocol processing, synchronization, etc. Further, each SAN 18 includes transmitter/receiver circuitry 122. In at least one embodiment, the transmitter/receiver circuitry 122 comprises radiofrequency (RF) transmitters and receivers for providing RF-based feeder uplinks and downlinks between each SAN 18 and the satellite 14.

In the end-to-end beamforming context, the satellite 14 includes a plurality of transponders 130, with each transponder 130 providing a respective signal pathway-a non-processed or "bent-pipe" pathway-through the satellite 14. The transponders 130 may be dedicated to the forward-link direction, providing forward-link signal pathways for relaying forward user traffic from the ground segment 16 towards the terminals 24, with a further plurality of similar transponders used for end-to-end beamforming in the return direction. In other embodiments, the same plurality of transponders 130 provides forward-link signal pathways and return-link signal pathways on a time-multiplexed, switched basis. In other arrangements, the plurality of transponders 130 includes at least some that have switchable connections, allowing for their individual use in either the forward direction or the return direction.

For forward-direction operation, each transponder 130 has an input (receive) end associated with a respective one among a plurality of cooperating receive antenna element 132 and has an output (transmit) end associated with a respective one among a plurality of cooperating transmit antenna elements 134. The plurality of receive antenna elements 132 are "cooperating" in the sense that one or more of them have antenna patterns that overlap with one or more neighboring receive antenna elements 132. The plurality of transmit antenna elements 134 are similarly cooperative. The arrangement provides for the signal superpositions that yield the desired beamforming.

There may be corresponding antenna subsystems onboard the satellite 14 dedicated for reception in the forward and/or return directions and further antenna subsystems dedicated for transmission in the forward and/or return directions. In the return direction in at least the end-to-end beamforming context, the "input" end of a transponder receives superpositions of return uplink signals from user terminals 24 operating in one or more return user beam coverage areas, which may or may not be coincident with the nominal forward user beam coverage areas 102. Correspondingly, the "output" end of each return-link transponder transmits the received superposition of return uplink signals as a corresponding return downlink signal that is received at two or more of the SANs 18.

For end-to-end beamforming in the forward direction and, for the moment, assuming only one fixed beam center target 30 in each nominal forward user beam coverage area 102, the CPS 20 forms respective forward traffic streams corresponding to the different nominal forward user beam coverage areas 102, according to scheduling decisions made by the scheduling controller 36. The beamforming controller 32 uses end-to-end channel estimates for the forward direction to compute the forward beam weights 112 for forward beamforming as a *M* x *K* matrix of beam weights. Here, M equals the number of SANs 18 participating in the end-to-end beamforming and K equals the number of forward user beams 100. Each forward traffic stream is used to form a forward beam signal, meaning that there are K forward beam signals, with each one conveying forward user traffic for transmission in a respective one of the K forward user beams.

Each column of the *M* × K beam weight matrix corresponds to one forward user beam 100 and comprises a weight vector having M elements, with each element being a respective SAN-specific weight. The beamforming circuitry 110 splits each one of the K forward beam signals into M copies, one copy for each SAN 18 participating in the forward end-to-end beamforming and applies the corresponding weight vector from the *M* x *K* beam weight matrix to obtain *M* weighted copies. As such, for each one of the *K* forward beam signals, there are *M* weighted copies, with each such weighted copy corresponding to a particular one among the participating SANs 18. The weighted copies destined for the same SAN 18 are combined across all K forward beam signals to form SAN-specific forward signals 136, which are sent from the CPS 20 to the respective SANs 18.

Thus, the beamforming circuitry 110 in one or more embodiments includes a splitting module and *M* forward weighting and summing modules. The splitting module splits (e.g., duplicates) each of the *K* forward beam signals into *M* groups of *K* forward beam signals, with one group for each of the *M* forward weighting and summing modules. Accordingly, each forward weighting and summing module receives all *K* forward beam signals. Here, "module" refers to configured circuitry.

Circuitry within the beamforming controller 32 operates as a forward beam weight generator module that generates the *M* × *K* forward beam weight matrix. In one or more embodiments, the forward beam weight matrix is generated based on a channel matrix in which the elements are estimates of end-to-end forward gains for each of the *K* × *M* end-to-end forward multipath channels to form a forward channel matrix. Estimates of the end-to-end forward gain are made in a channel estimator module.

Thus, in the forward-link direction, each SAN 18 receives one of the *M* SAN-specific forward signals 136, for transmission by the SAN 18 as a forward uplink signal 140. Each receive antenna element 132 of the satellite 14 receives a unique superposition of the forward uplink signals 140, with each such superposition involving the forward uplink signals 140 from two or more of the *M* SANs 18. The superpositions are unique because the SANs 18 are geographically distributed, resulting in a different uplink channel between each SAN 18 and each receive antenna element 132 on the satellite 14.

The unique superposition of forward uplink signals 140 received at each receive antenna element 132 may be referred to as a forward composite uplink signal 142, meaning that the input end of each of the transponders 130 receives a unique forward composite uplink signal 142. Each transponder 130 operates as a non-processed, bent-pipe transponder that couples the correspondingly received forward composite uplink signal 142 to the user downlink side of the satellite 14, for transmission as a forward user downlink signal 144 from a corresponding one of the transmit antenna elements 134. The forward user downlink signals 144, i.e., the respective antennal element signals transmitted from the respective transmit antenna elements 134, are the corresponding forward composite uplink signals 142, subject to filtering and amplification. In one or more embodiments, the transponders 130 also apply frequency translation from uplink signal frequencies to downlink signal frequencies.

The plurality of transmit antenna elements 134 is configured such that the respective forward user downlink signals 144 transmitted from the different transmit antenna elements 134 superpose in the far field-i.e., at distances from the transmit antenna elements 134 at which radiative behavior of the electromagnetic signals dominates. These superpositions form the desired plurality of forward user beams 100. The plurality of forward user beams 100 illuminates the overall forward user service area 104.

Each forward user beam 100 illuminates a respective one among the plurality of nominal forward user beam coverage areas 102. With the use of beam oscillation, the above-described beamforming operations are performed with respect to each beam center target 30, as each such target is sequentially selected within the beam oscillation cycle. For example, assume that each nominal forward user beam coverage area 102 has a like set of seven beam center targets 30 within it, with "like" meaning same relative distribution/location of beam center targets 30 within each nominal forward user beam coverage area 102. The seven beam center targets 30 in each forward user beam coverage area may be referred to as target 1, target 2, target 3, and so on.

For end-to-end beamforming with beam oscillation, the particular forward beam weights 112 applied by the beamforming circuitry 110 are dependent on which beam center targets are selected in the respective nominal forward user beam coverage areas 102 at any given time. Assume that the beam oscillation cycle follows a common selection sequence across all nominal forward user beam coverage areas 102-i.e., during a first selection window, target 1 in each nominal forward user beam coverage area 102 is selected, during a second selection window, target 2 in each nominal forward user beam coverage area 102 is selected, and so on. Thus, there would be a distinct *M* × *K* forward beam weight matrix for the target 1 selection window, a distinct *M* × *K* forward beam weight matrix for the target 2 selection window, and so on. In each such selection window, each column vector from the *M* x *K* forward beam weight matrix is a set of SAN-specific weights computed for formation of the corresponding forward user beam 100 centered on the particular beam center target 30 that is used in the selection window.

The beamforming controller 32, the beamforming circuitry 110, and the CPS 20 at large may comprise fixed circuitry or programmatically configured circuitry or a mix of both. In one example, at least some of the beamforming circuitry 110 comprises Digital Signal Processing (DSP) hardware configured to carry out the beamforming computations. Additionally, or alternatively, at least some portions of the CPS 20 and/or beamforming circuitry 110 comprise one or more microprocessors or DSPs or other programmatically configured digital processing circuitry that is specially adapted to carry out the described functions, based on executing computer program instructions stored in a computer readable medium. For example, the CPS 20 includes or is associated with one or more types of storage, such as RAM for working program execution and FLASH for non-volatile storage of the program instructions. Such storage may also be used for storing the beam weights 112 and the channel estimates, along with the aforementioned per-terminal signal-quality metrics and other data used during scheduling.

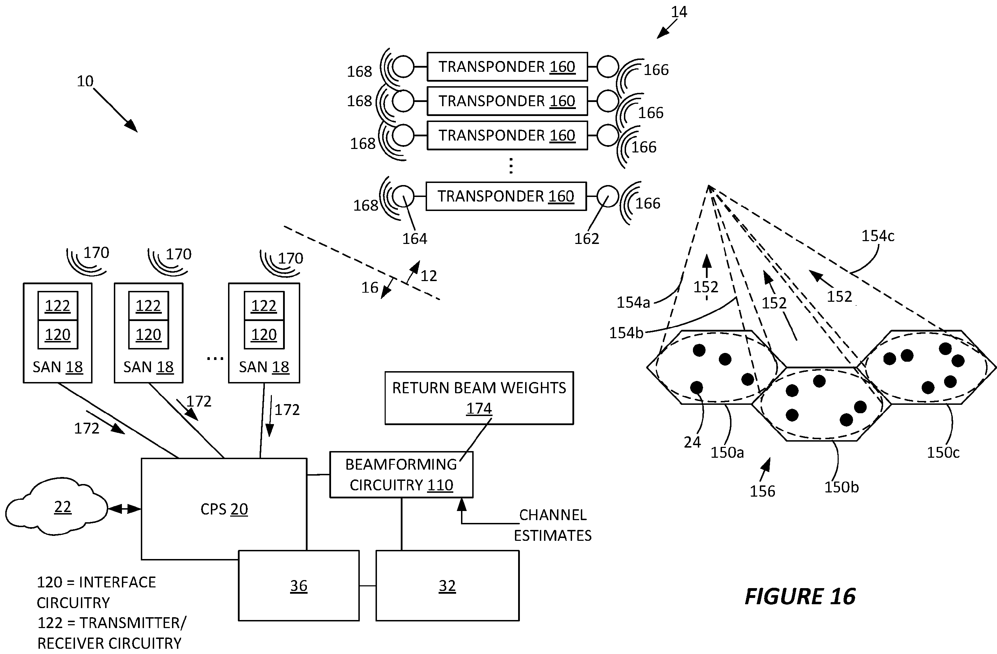

Figure 16 illustrates an end-to-end beamforming example in the return direction. Terminals 24 operating in respective nominal return user beam coverage areas 150 transmit return user traffic 152, based on scheduling by the SCS 10. The SCS 10 uses return user beams 154 for the respective nominal return user beam coverage areas 150, although the return user beams 154 represent directional reception and may be formed in the digital processing domain by the SCS 10. In this sense, then, return beamforming by the SCS 10 can be understood as recovering return beam signals in the signal processing domain, with each return beam signal "covering" a corresponding one of the nominal return user beam coverage areas 150. Recovering a given return beam signal means enhancing the SINR for return uplink signals received from terminals 24 located within the corresponding nominal return user beam coverage area 150.

Using the non-limiting example of three nominal return user beam coverage areas 150a, 150b, and 150c, there are three corresponding return user beams 154a, 154b, and 154c. In turn, the SCS 10 forms, in the processing domain, a corresponding return user beam signal corresponding to each such return user beam 154. Such beamforming works based on the satellite 14 having a plurality of return transponders 160-which may or may not be the transponders 130 illustrated in Figure 15-with each return transponder 160 being a non-processed signal path through the satellite 14.

Each return transponder 160 is associated with a receive antenna element 162 coupled to an input end of the return transponder 160 and is further associated with transmit antenna element 164 coupled to its output end. The plurality of receive antenna elements 162 act as cooperating elements, with each one receiving a unique superposition of return uplink signals transmitted by the population of terminals 24 across an overall satellite service area 156 that is subdivided via the respective nominal return user beam coverage areas 150. The unique superposition received at each receive antenna element 162 may be referred to as a return composite uplink signal 166, with the corresponding return transponder 160 transmitting a corresponding return downlink signal 168. The return downlink signal 168, i.e., the antenna element signal transmitted by each return transponder 160 via the associated transmit antenna element 164, is the corresponding composite uplink signal 166 received by the transponder 160, subject to filtering and amplification. Here, the plurality of transmit antenna elements 164 are also cooperating elements. In one or more embodiments, the transponders 160 also perform frequency translation, to shift from one or more return uplink frequencies to one or more return downlink frequencies.

Each SAN 18 receives a return composite downlink signal 170 that is a unique superposition of the return downlink signals 168 transmitted by the satellite 14. The superposition is unique at each SAN 18 because the SANs 18 are geographically distributed, meaning that there is a different propagation path from each transmit antenna element 168 onboard the satellite to each SAN 18 in the population of SANs 18 participating in the return end-to-end beamforming.

Each SAN 18 provides the CPS 20 with a SAN-specific return signal 172 containing signal samples corresponding to the return composite downlink signal 170 received by the SAN 18. The CPS 20 applies return beam weights 174 to form a corresponding return beam signal for each of the nominal return user beam coverage areas 150. In particular, for each return user beam coverage area 150, there are corresponding beam weights for each beam center 30 in the set of beam center targets 30 that are located within the nominal return user beam coverage area 150. As such, the beamforming circuitry 110 can be understood as using a respective beam weight vector for each beam center target 130 in each nominal return user beam coverage area 150. As before, the beamforming controller 32 may be configured to compute the specific values of these beam weights based on CSI determined for respective terminals 24 that are at or very near the respective beam center targets 30.

As an example, assume that each nominal return user beam coverage area 150 contains a set of seven beam center targets 30-targets 1 through 7-with the same pattern of such targets being used across all nominal return user beam coverage areas 150. That is, "target 1" is at the same relative location in all nominal return user beam coverage areas 150, "target 2" is at the same relative location in all nominal return user beam coverage areas 150, and so on. Correspondingly, there are specific beam weights for each nominal return user beam coverage area 150 corresponding to target 1 in that area, other specific beam weights corresponding to target 2 in that area, and so on. Thus, with respect to the selection of target 1, the return beam signal for any given nominal return user beam coverage area 150 has enhanced SINR for return uplink signals from those terminals 24 within the nominal return user beam coverage area 150 that are closest to target 1. The same holds in turn for successive selection of targets 2, 3, 4, 5, 6, and 7. Scheduling by the scheduling controller 36 opportunistically schedules the terminals 24 in each such nominal return user beam coverage area 150 based on these changing SINRs induced by the beam oscillation cycle.

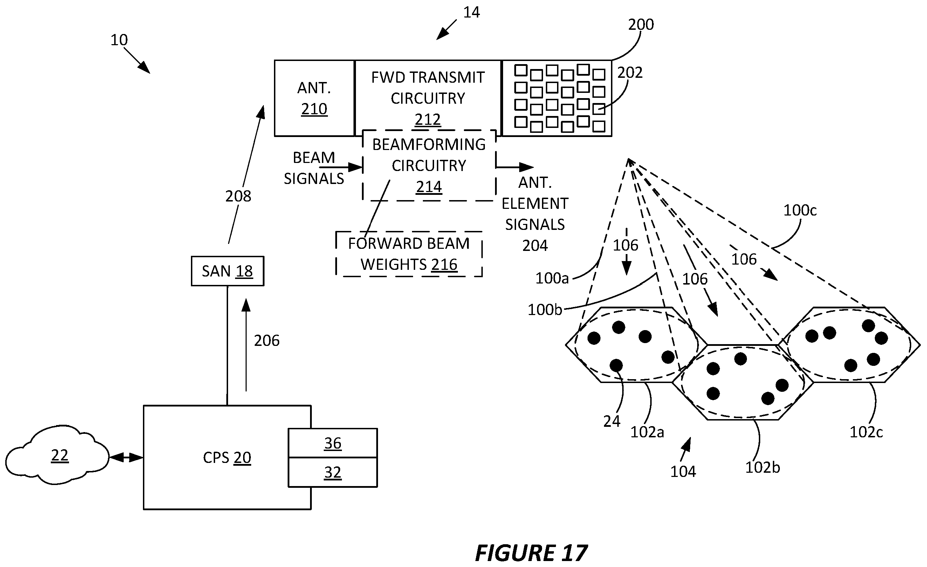

Figure 17 illustrates another example embodiment of the SCS 10, where the satellite 14 includes a phased array antenna 200 comprising a plurality of antenna elements 202. Here, the antenna elements 202 represent another example embodiment of cooperating antenna elements used in beamforming.

The desired forward user beams 100 are formed by transmitting respective ones among a plurality of antenna element signals 204 from respective ones among the plurality of antenna elements 202. That is, each antenna element signal 204 maps to a particular antenna element 202. To form a given forward user beam 100, the antenna element signals 204 are respectively weighted versions of the corresponding forward beam signal, where the weights to form those versions are computed such that simultaneous transmission of the antenna element signals 204 from the phased array antenna 200 yields far-field signal superpositions resulting in the given forward user beam 100. The same principle applies for the formation of a plurality of forward user beams 100, with the antenna element signals 204 being composites or combinations of respectively weighted forward beam signals.

In at least one embodiment, the CPS 20 transmits a plurality of forward beam signals 206 to one or more SANs 18, with the SAN(s) 18 transmitting the forward beam signals 206 to the satellite 14 via a feeder uplink signal 208. The satellite 14 receives the feeder uplink signal 208 via an antenna 210, which feeds forward transmit circuitry 212 of the satellite 14. The forward transmit circuitry 212 includes beamforming circuitry 214 as another example implementation of the beamformer 34 introduced in Figure 1. The beamforming circuitry 214 is configured to create the antenna element signals 204 from the plurality of forward beam signals 206 as described above, based on respective sets of forward beam weights 216. Here, there is a respective set of beam weights 216 for each beam center target 30 in each nominal forward user beam coverage area 102. The scheduling controller 36 in the CPS 20 opportunistically schedules the terminals 24 in each nominal forward user beam coverage area 102 for each beam oscillation cycle, as described earlier herein.

Note that the beamforming controller 32 computes the forward beam weights 216 and resides in the CPS 20 in one embodiment. In another embodiment, the beamforming controller 32 resides onboard the satellite 14. Thus, in one embodiment related to the arrangement depicted in Figure 17, circuitry onboard the satellite 14 performs channel estimation and beam weight computation, meaning that the forward beam weights 216 are computed in the space segment 12. In another embodiment, the CPS 20 computes the forward beam weights 216 and sends them to the satellite 14, e.g., on a recurring basis, based on channel estimation and beam weight computation performed by the CPS 20. For example, the beamforming controller 32 may be configured to compute the forward beam weights 216, with the ground segment 16 then transferring such information to the satellite 14, for use by the beamforming circuitry 214.

In yet another embodiment, the CPS 20 forms beam element signals that are weighted for the formation of the desired forward user beams 100, with each beam element signal destined for transmission from a respective one of the cooperating antenna elements 202. The feeder uplink signal(s) 208 transmitted by the SAN(s) 18 thus carry these beam element signals rather than the forward beam signals from which they were formed, and the forward transmit circuitry 212 in such embodiments is modified to form the antenna element signals 204 directly from the received beam element signals, e.g., via filtering, power amplification, and, possibly, frequency translation.

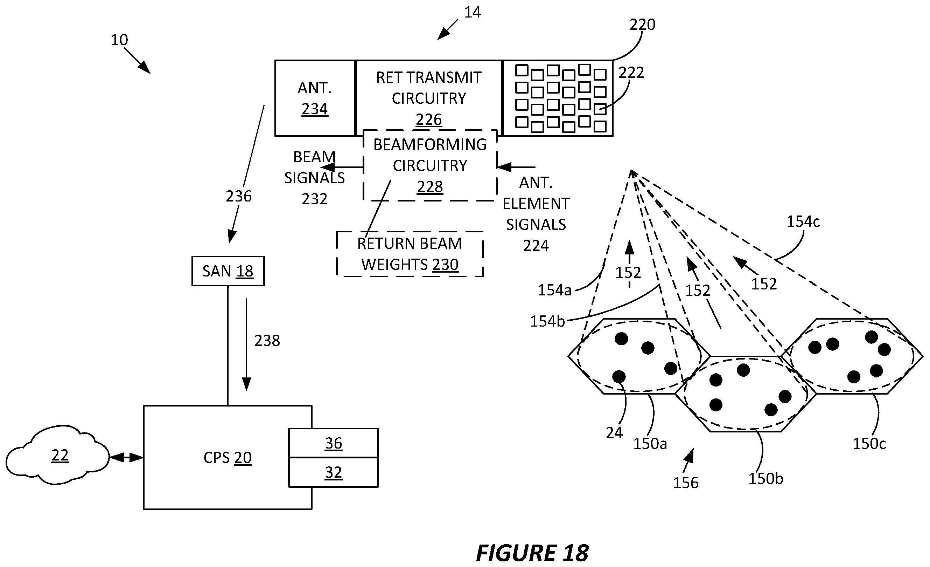

Figure 18 illustrates an embodiment related to Figure 17 but focuses on return beamforming. The respective terminals 24 in each nominal return user beam coverage area 150 transmit return traffic according to scheduling by the scheduling controller 36, with such scheduling performed according to the beam oscillation techniques disclosed herein. The return uplink signals from the terminals 24 are received by the satellite via an antenna array 220, which comprises a plurality of cooperating antenna elements 222. Each antenna element 222 provides a corresponding antenna element signal 224 that feeds into return transmit circuitry 226.

The return transmit circuitry 226 in one or more embodiments includes return beamforming circuitry 228, which applies return beam weights 230 to the antenna element signals 224, to obtain corresponding return beam signals 232. Each return beam signal 232 has enhanced SINR for return uplink signals from terminals 24 located in a corresponding one of the nominal return user beam coverage areas 150.

As with the forward beam weights 216, there are different sets of return beam weights 230, with each set corresponding to a particular nominal return user beam coverage area 150 and a particular beam center target 30 within that particular nominal user beam coverage area 150. Further, although the same reference number "30" is used in reference to beam center targets in both the forward and return direction contexts, it is not necessary for the beam center targets 30 used for forward beamforming be the same as those used for return beamforming. Indeed, to the extent that the nominal forward user beam coverage areas 102 are not coextensive with the nominal return user beam coverage areas 150, the beam center targets 30 used for forward beamforming may be at locations that are different than the locations of the beam center targets used for return beamforming.

The satellite 14 transmits one or more feeder downlink signals 236 that contain the return beam signals 232, with such transmission performed via one or more antennas 234 onboard the satellite 14. As will be appreciated, the return feeder link may be RF or optical and, as such, the satellite 14 in one or more embodiments may include optical transmitters for transmission of the return beam signals 232. Indeed, the satellite 14 and each of the one or more SANs 18 may include optical transmitters and receivers, such that forward and return feeder link signals are optical.

Regardless, the CPS 20 receives a SAN-specific return signal 238 from each of the one or more SANs 18, with these one or more SAN-specific return signals 238 conveying the return beam signals 232 for processing by the CPS 20. Such processing includes recovery of the return traffic conveyed via each return user beam 154.

In a variation of the arrangement shown in Figure 18, the satellite 14 omits the return beamforming circuitry 228 and it returns beam element signals to the SAN(s) 18. These return beam element signals are the antenna element signals 224, subject to filtering, amplification, and, possibly, frequency translation. Thus, the SAN-specific return signal(s) 238 contain the return beam element signals, and the CPS 20 includes return beamforming circuitry, e.g., digital domain circuitry, for combining the beam element signals according to respective sets of return beam weights. That is, for each nominal return user beam coverage are 150, and for each beam center target 30 within it, the CPS 20 recovers a corresponding return beam signal based on combining the beam element signals with a set of return beam weights calculated in dependence on the beam center target. Each return beam signal can be understood as enhancing the SINR for return uplink signals transmitted by terminals 24 in the nominal return user beam coverage area 150 to which the return beam signal corresponds. As the different beam center targets 30 for that particular nominal return user beam coverage area 150 are selected, the return beam signal particularly enhances the SINR for return uplink signals transmitted from those terminals 24 that are closest to the selected beam center target.

While Figures 17 and 18 depict the beamforming circuitry onboard the satellite 14, it should be understood that the beam weights applied by such beamforming circuitry may be calculated onboard the satellite 14 or calculated in the ground segment 16 and transmitted to the satellite 14. Of course, as described earlier, still other embodiments use end-to-end beamforming, wherein the beam weights are both calculated and applied in the ground segment 16.

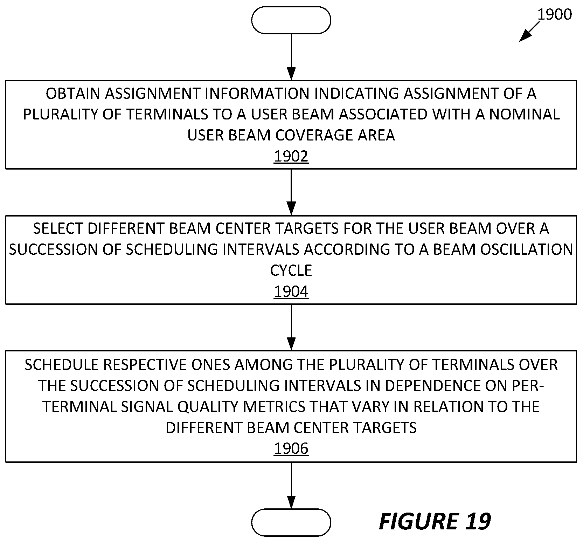

Figure 19 illustrates an example method 1900 of scheduling terminals 24 in a SCS 10. The method 1900 includes: obtaining (Block 1902) assignment information indicating assignment of a plurality of terminals 24 to a user beam 28 of the SCS 10, the user beam 28 associated with a nominal user beam coverage area 26 and the plurality of terminals 24 located within the nominal user beam coverage area 26; selecting (Block 1904) different beam center targets 30 for the user beam 28 over a succession of scheduling intervals 50 according to a beam oscillation cycle, wherein the different beam center targets 30 are different locations within the nominal user beam coverage area 26; and scheduling (Block 1906) respective ones among the plurality of terminals 24 over the succession of scheduling intervals 50 in dependence on per-terminal signal quality metrics that vary in relation to the different beam center targets 30.

In one or more embodiments, the different beam center targets 30 comprise a respective set of distributed locations within the nominal user beam coverage area 26. The respective set of distributed locations is based on a predefined pattern, for example.

The beam oscillation cycle according to one or more embodiments defines a selection sequence of the different beam center targets 30, and the selection sequence includes a selection dwell time for each beam center target 30 among the different beam center targets 30. The selection dwell times are defined, for example, as integer numbers of scheduling intervals 50. The selection dwell times are non-uniform in one or more embodiments, in dependence on a distribution of the plurality of terminals 24 within the nominal user beam coverage area 26. That is, the dwell time used for one beam center target 30 may be longer or shorter than the dwell time used for another beam center target 30. However, in one or more other embodiments, the selection dwell times are uniform. Dwell times can also be understood as "duty cycle." For example, if target selection uses non-contiguous scheduling intervals 50-i.e., a given beam center target 30 is selected during the beam oscillation cycle in two or more non-contiguous intervals-then the duty cycle of that given beam center target 30 for the beam oscillation cycle may be defined by the number of scheduling intervals 50 for which it is selected divided by the total number of scheduling intervals 50 spanned by the beam oscillation cycle. In one or more embodiments, the selection sequence for sequential selection of the different beam center targets 30 is predefined.

The succession of scheduling intervals 50 comprises, for example, one scheduling frame 52 among a plurality of successive scheduling frames 52. Correspondingly, in one or more embodiments, the method 1900 includes carrying out the beam oscillation cycle and the scheduling with respect to each scheduling frame 52, with the per-terminal signal quality metrics being updated with respect to each scheduling frame 52.

The per-terminal signal quality metrics comprise a favorability table 60, for example, with the table containing a respective metric value for each terminal 24 in each scheduling interval 50 among the succession of scheduling intervals 50. The respective metric value for each terminal 24 in each scheduling interval 50 is indicative of a signal quality for the terminal 24 with respect to the user beam 28 being centered on the particular one of the different beam center targets 30 that is applicable to the scheduling interval 50.

In at least one embodiment, the method 1900 includes maintaining the favorability table 60 as an efficiency table 70, such that the favorability metric values are efficiencies in bits per symbol for serving the terminals 24 with respect to each scheduling interval 50. As such, for each terminal 24, there will be a corresponding efficiency in the efficiency table 70 for each scheduling interval 50 in the scheduling frame 52. In one or more embodiments, the scheduling decisions for the scheduling frame 52 may be based on the efficiencies directly, with no biasing.

However, as noted, one or more embodiments use biasing values, such as per-terminal biasing values or per-interval biasing values. In the former case, each terminal 24 is assigned a biasing value for the scheduling frame 52, and that assigned biasing values is used to bias all of the per-interval efficiencies corresponding to the terminal 24. In the latter case, each scheduling interval 50 within the scheduling frame 52 is assigned a biasing value that is applied to the per-terminal efficiencies for that scheduling interval 50. In either approach to biasing, the biasing values are used to produce biased efficiencies, or, more generally, to produce biased favorability metric values for the terminals 24, with the scheduling decisions made according to the biased favorability metric values, rather than directly on the unbiased favorability metric values.

Each scheduling interval 50 has a fixed number of symbols for allocation, for example. In such a case, scheduling respective ones among the plurality of terminals 24 comprises, for example, selecting which terminals 24 are scheduled in which scheduling intervals 50 according to the PEs of the terminals 24 across the succession of scheduling intervals 50, and determining byte allocations to the scheduled terminals 24 in each scheduling interval 50 in dependence on the respective efficiencies of the scheduled terminals-i.e., the efficiency values in the efficiency table 70. That is, the decision as to which terminals 24 are scheduled in which scheduling intervals 50 may be based on the PEs, while the byte allocations made to the terminals 24 scheduled in each scheduling interval 50 may be based on the efficiencies, not the PEs, of the schedule terminals 24. This allows the scheduling bias values to influence the scheduling decisions, while still determining byte allocations in dependence on the efficiencies.

In one or more embodiments, for a given plurality of terminals 24 assigned to a given user beam 28, scheduling respective ones among the given plurality terminals 24 over any given succession of scheduling intervals 50 comprises maximizing a total capacity of the given user beam 28. Maximizing the total capacity of the given user beam 28 comprises, for example, solving a constrained optimization problem with respect to the succession of scheduling intervals 50. Here, solving the constrained optimization problem maximizes capacity of the user beam 28 under the constraint that service fairness among the plurality of terminals 24 is maintained.

As explained earlier, each given user beam 28 may be based on beamforming by the SCS 10, with each beam center target 30 for each given user beam 28 corresponding to a respective set of beam weights used in the beamforming. Selecting the different beam center targets 30 defined for any given user beam 28 comprises, in one or more embodiments, controlling a beamformer to apply the respective sets of beam weights over the beam oscillation cycle, each respective set of beam weights applied during a respective subset of one or more scheduling intervals within the succession of scheduling intervals. The beamformer is onboard a satellite 14 of the SCS 10, in one or more embodiments, such that controlling the beamformer comprises outputting control signaling for transfer to the satellite 14. The control signaling comprises beam weights, for example, or index values or other information indicating the beam weights. In one embodiment, the control signaling includes scheduling information indicating the selection order and selection duration for respective sets of beam weights used over one or more beam oscillation cycles.

In the context of the method 1900, the SCS 10 may use a plurality of user beams 28, where each user beam 28 has a respective set of beam center targets 30 containing a same number and a same relative geographic arrangement of different beam center targets 30. Here, each user beam 28 further has a respective plurality of terminals 24 assigned and is associated with a respective nominal user beam coverage area 26. Further in this example, the beam oscillation cycle is common for the plurality of user beams 28 and defines a common selection sequence applicable to all respective sets of user beam center targets 30. In this context, the method 1900 comprises jointly selecting the different beam center targets 30 from the respective sets of beam center targets 30 for the plurality of user beams over any given succession of scheduling intervals 50 according to the common selection sequence, and correspondingly scheduling the respective pluralities of terminals 24 over the given succession of scheduling intervals. Each nominal user beam coverage area 26 may have the same number and same relative arrangement-pattern-of beam center targets 30, so that, in relative terms, the "same" beam center targets 30 may be selected at the same time across all nominal user beam coverage areas 26 involved in the beam oscillation.

The plurality of user beams 28 may be a plurality of forward user beams 100 used for transmitting forward-link traffic to individual ones among the respective pluralities of terminals 24. Alternatively, the plurality of user beams 28 may be a plurality of return user beams 154 used for receiving return-link traffic from individual ones among the respective pluralities of terminals 24.

In one example where the plurality of user beams 28 is a plurality of forward user beams 100, the SCS 10 further uses a plurality of return user beams 154, and the method 1900 as carried out by the SCS 10 includes using the beam oscillation technique with respect to the forward user beams 100 and with respect to the return user beams 154. Such operations may include the SCS 10 applying beam oscillation independently in the forward and return directions. Such operation involves, for example, the SCS 10 selecting beam center targets 30 and scheduling respective terminals 24 with respect to the plurality of forward user beams 100 independent of selecting different beam center targets 30 and scheduling respective terminals 24 with respect to the plurality of return user beams 154. Broadly, the beam oscillation may be performed independently with respect to the forward and return direction and the nominal forward and return beam coverage areas 102 and 150 need not beam the same. Likewise, the beam center targets 30 used for beam oscillation in the forward direction need not be the same as the beam center targets used for beam oscillation in the return direction.

The SCS 10 is configured to carry out the method 1900, including any or all of the variations and extensions described above. Such configuration is based, for example, on the execution of computer program instructions by one or more microprocessors, digital signal processors, or other types of digital processors, such that the digital processor(s) are specially adapted to carry out the beam oscillation and corresponding terminal scheduling described herein. See, e.g., the processing circuitry 39 shown in Figure 1, which may be in whole or in part implemented via specially adapted digital processors.

Regardless of the particular implementation details, an example SCS 10 includes a satellite 14 comprising a plurality of cooperating antenna elements configured for use in forming a user beam 28 that is associated with a nominal user beam coverage area 26, wherein the user beam 28 is used to serve terminals 24 located in the nominal user beam coverage area 26. Further, the SCS 10 includes a beam oscillation controller 32 that is configured to select different beam center targets 30 for the user beam 28 over a succession of scheduling intervals 50 according to a beam oscillation cycle, wherein the different beam center targets 30 are different locations within the nominal user beam coverage area 26. A beamformer 34 of the SCS 10 is configured to oscillate the user beam 28 during the beam oscillation cycle by changing the beam weights used to form the user beam 28 in dependence on the selected beam center targets. A scheduling controller 36 is configured to schedule respective ones among the plurality of terminals 24 assigned to the user beam 28 over a succession of scheduling intervals 50 in dependence on per-terminal signal quality metrics that vary in relation to the different beam center targets used during oscillation of the user beam 28.

Again, the nominal user beam coverage area 26 associated with the user beam 28 remains fixed during beam oscillation, and the serving-beam assignments of terminals 24 do not change as a function of beam oscillation. Thus, although the user beam 28 has different beam orientations/pointing directions during each beam oscillation cycle, it logically remains the "same" user beam 28 because it remains associated with the same fixed nominal user beam coverage area 26 and because the individual terminals 24 that are logically associated with the user beam 28 for service does not change as a function of the beam oscillations.

As a broad example, a SCS 10 in one or more embodiments includes a space segment 12 comprising one or more satellites 14 and a ground segment 16 comprising one or more SANs 18. The SCS 10 is configured to use beamforming to serve terminals 24 in a nominal user beam coverage area 26 via a corresponding user beam 28. In at least one such embodiment, the SCS 10 uses a potentially large plurality of user beams 28 to serve respective pluralities of terminals 24. Here, each user beam 28 is associated with a corresponding one of the nominal user beam coverage areas 26 on a fixed, one-to-one basis, and each respective plurality of terminals 24 is located in a respective one of the nominal user beam coverage areas 26.

The ground segment 16 includes processing circuitry 39 configured to: (a) obtain assignment information indicating assignment of a plurality of terminals 24 to any given user beam 28; (b) select different beam center targets 30 for the given user beam 28 over a succession of scheduling intervals 50 according to a beam oscillation cycle, wherein the different beam center targets 30 are different locations within the associated nominal user beam coverage area 26; and (c) schedule respective ones among the plurality of terminals 24 over the succession of scheduling intervals 50 in dependence on per-terminal signal quality metrics that vary in relation to the different beam center targets 30.

The nominal user beam coverage areas 26 are predefined and each nominal user beam coverage area 26 is served via a corresponding user beam 28, such that the SCS 10 assigns a given terminal 24 to the user beam 28 that is used to serve the nominal user beam coverage area 26 in which the terminal 24 is located. Each terminal 24 may be registered in the SCS 10 and have an assigned or fixed identifier (ID) and the processing circuitry 39 obtains the relevant assignment information based on receiving signaling from other processing circuitry within the SCS 10 or queries an assignment database. Each user beam 28 may have a beam ID or other identifying characteristic that remains unchanging with respect to oscillation of the user beam 28 and, similarly, the logical mapping within the SCS of beam signals to user beams 28 remains unchanging with respect to beam oscillations.

Here, a "beam signal" is a composite information signal carrying traffic to or from respective ones among the terminals 24 located in a particular nominal user beam coverage area 26. For a plurality of forward user beams, each forward user beam conveys a corresponding beam signal, with that corresponding beam signal comprising multiplexed traffic for the terminals 24 contained in the nominal forward user beam coverage area associated with the forward user beam. Similar logic holds in the return direction.

The different beam center targets 30 comprise a respective set of distributed locations within the nominal user beam coverage area 26, for example. The respective set of distributed locations is based on a predefined pattern in one or more embodiments. However, in at least one embodiment, the pattern of beam center targets 30 within a nominal user beam coverage area 26 is based on the distribution of terminals 24 within it. In the same or at least one other embodiment, the dwell times used for the different beam center targets 30 is based on the distribution of terminals 24 within the nominal user beam coverage area 26.

The beam oscillation cycle defines a selection sequence of the different beam center targets 30, i.e., the beam oscillation cycle defines the order and timing for selecting different beam center targets 30. The selection sequence may be predefined, or it may be decided dynamically, e.g., on a frame-by-frame basis, or on a semi-static (slowly changing) basis. The selection sequence includes a selection dwell time for each beam center target 30 among the different beam center targets 30, with the selection dwell times being defined in number of scheduling intervals. As noted, the selection dwell times may be uniform or non-uniform. In one example, the selection dwell times are non-uniform in dependence on whether the number of scheduling intervals 50 included in a scheduling frame 52 is evenly divisible by the number of beam center targets 30.

Broadly, the technique of performing beam oscillations and correspondingly scheduling terminals 24 on an opportunistic basis in dependence on signal quality variations arising from the beam oscillations offers significant increases in overall capacity of a SCS 10. The capacity increase attains because the technique allows all terminals 24 to have beam-center or near-beam-center SINRs during at least some scheduling intervals 50. Advantageously, the technique does not sacrifice QoS fairness or peak burst speeds, nor does it require changes to the satellite or ground infrastructure. Additionally, the technique does not require coordination between the beamforming operations and the scheduling operations, given that scheduling is driven organically by the characteristic variations in signal-quality metrics seen for respective ones among the involved terminals 24 as a consequence of the beam oscillations. As a further advantage, the technique may be applied to waveforms that are divided into timeslots, frequency channels, codewords, or any combination of those domains.

Notably, modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.
The disclosure comprises the following items:
1. A method of scheduling terminals in a satellite communications system, the method comprising:
   obtaining assignment information indicating assignment of a plurality of terminals to a user beam of the satellite communications system, the user beam associated with a nominal user beam coverage area and the plurality of terminals located within the nominal user beam coverage area;
   selecting different beam center targets for the user beam over a succession of scheduling intervals according to a beam oscillation cycle, wherein the different beam center targets are different locations within the nominal user beam coverage area; and
   scheduling respective ones among the plurality of terminals over the succession of scheduling intervals in dependence on per-terminal signal quality metrics that vary in relation to the different beam center targets.
2. The method according to item 1, wherein the different beam center targets comprise a respective set of distributed locations within the nominal user beam coverage area.
3. The method according to item 2, wherein the respective set of distributed locations is based on a predefined pattern.
4. The method according to any one of items 1-3, wherein the beam oscillation cycle defines a selection sequence of the different beam center targets.
5. The method according to item 4, wherein the selection sequence includes a selection dwell time for each beam center target among the different beam center targets.
6. The method according to item 5, wherein the selection dwell times are non-uniform in dependence on a distribution of the plurality of terminals within the nominal user beam coverage area.
7. The method according to any one of items 4-6, wherein the selection sequence is predefined.
8. The method according to any one of items 1-7, further comprising determining the beam center targets in dependence on a distribution of the plurality of terminals within the nominal user beam coverage area.
9. The method according to any one of items 1-8, wherein the succession of scheduling intervals comprises one scheduling frame among a plurality of successive scheduling frames, and wherein the method comprises carrying out the beam oscillation cycle and the scheduling with respect to each scheduling frame, and further wherein the per-terminal signal quality metrics are updated with respect to each scheduling frame.
10. The method according to any one of items 1-9, wherein the per-terminal signal quality metrics comprise favorability metric values in a favorability table, with the favorability table containing a corresponding favorability metric value for each terminal with respect to each scheduling interval.
11. The method according to item 10, wherein the favorability metric values are efficiencies in bits per symbol for serving each terminal with respect to each scheduling interval, such that the favorability table comprises an efficiency table, and wherein the method further includes forming a pseudo-efficiency table by applying scheduling bias values to the efficiencies to obtain biased efficiencies, and making scheduling decisions according to the biased efficiencies.
12. The method according to item 11, wherein each terminal has a required number of bytes which must be served with respect to the scheduling frame, and wherein making the scheduling decisions comprises selecting which scheduling intervals are used for which terminals according to the biased efficiencies of the terminals across the succession of scheduling intervals.
13. The method according to item 10, wherein the scheduling bias values are one of: per-interval scheduling bias values or per-terminal scheduling bias values.
14. The method according to any one of items 1-13, wherein the per-terminal signal quality metric for each terminal varies in relation to the different beam center targets as a function of the location of the terminal relative to the different beam center targets.
15. The method according to any one of items 1-14, wherein scheduling respective ones among the plurality terminals over the succession of scheduling intervals comprises maximizing a total capacity of the user beam.
16. The method according to item 15, wherein maximizing the total capacity of the user beam comprises solving a constrained optimization problem with respect to the succession of scheduling intervals, wherein solving the constrained optimization problem maximizes capacity of the user beam under the constraint that service fairness among the plurality of terminals is maintained.
17. The method according to any one of items 1-16, wherein the user beam is based on beamforming by the satellite communications system, and wherein each beam center target corresponds to a respective set of beam weights used in the beamforming.
18. The method according to item 17, wherein selecting the different beam center targets comprises controlling a beamformer to apply the respective sets of beam weights over the beam oscillation cycle, each respective set of beam weights applied during a respective subset of one or more scheduling intervals within the succession of scheduling intervals.
19. The method according to item 18, wherein the beamformer is onboard a satellite of the satellite communications system, and wherein controlling the beamformer comprises outputting control signaling for transfer to the satellite.
20. The method according to any one of items 1-19, wherein the user beam is one among a plurality of user beams used by the satellite communications system, and wherein:
   each user beam has a respective set of beam center targets containing a same number and a same relative geographic arrangement of different beam center targets, and each user beam further has a respective plurality of terminals assigned and a respective user beam coverage area;
   the beam oscillation cycle is common for the plurality of user beams, and defines a common selection sequence applicable to all respective sets of user beam center targets; and
   the method comprises jointly selecting the different beam center targets from the respective sets of beam center targets for the plurality of user beams over the succession of scheduling intervals according to the common selection sequence, and correspondingly scheduling the respective pluralities of terminals over the succession of scheduling intervals.
21. The method according to item 20, wherein the plurality of user beams comprises a plurality of forward user beams used for transmitting forward-link traffic to individual ones among the respective pluralities of terminals.
22. The method according to item 20, wherein the plurality of user beams is a plurality of return user beams used for receiving return-link traffic from individual ones among the respective pluralities of terminals.
23. The method according to item 20, wherein the plurality of user beams is a plurality of forward user beams, wherein the satellite communications system further uses a plurality of return user beams, and wherein the method comprises selecting beam center targets and scheduling respective terminals with respect to the plurality of forward user beams independent of selecting different beam center targets and scheduling respective terminals with respect to the plurality of return user beams.
24. A satellite communications system comprising:
   a satellite comprising a plurality of cooperating antenna elements configured for use in forming a user beam that is associated with a nominal user beam coverage area, wherein the user beam is used to serve terminals located in the nominal user beam coverage area;
   a beam oscillation controller configured to select different beam center targets for the user beam over a succession of scheduling intervals according to a beam oscillation cycle, wherein the different beam center targets are different locations within the nominal user beam coverage area;
   a beamformer configured to oscillate the user beam during the beam oscillation cycle by changing the beam weights used to form the user beam in dependence on the selected beam center targets; and
   a scheduling controller configured to schedule respective ones among the plurality of terminals over the succession of scheduling intervals in dependence on per-terminal signal quality metrics that vary in relation to the different beam center targets.
25. The satellite communications system according to item 24, wherein the different beam center targets comprise a respective set of distributed locations within the nominal user beam coverage area.
26. The satellite communications system according to item 25, wherein the respective set of distributed locations is based on a predefined pattern.
27. The satellite communications system according to any one of items 24-26, wherein the beam oscillation cycle defines a selection sequence of the different beam center targets.
28. The satellite communications system according to item 27, wherein the selection sequence includes a selection dwell time for each beam center target among the different beam center targets.
29. The satellite communications system according to item 28, wherein the selection dwell times are non-uniform in dependence on a distribution of the plurality of terminals within the nominal user beam coverage area.
30. The satellite communications system according to any one of items 27-29, wherein the selection sequence is predefined.
31. The satellite communications system according to any one of items 24-31, wherein the succession of scheduling intervals comprises one scheduling frame among a plurality of successive scheduling frames, and wherein the satellite communications system is configured to carry out the beam oscillation cycle and scheduling with respect to each scheduling frame, and update the per-terminal signal quality metrics with respect to each scheduling frame.
32. The satellite communications system according to any one of items 24-31, wherein the per-terminal signal quality metrics comprise favorability metric values in a favorability table maintained by the scheduling controller, with the favorability table containing a corresponding favorability metric value for each terminal with respect to each scheduling interval.
33. The satellite communications system according to item 32, wherein the favorability metric values are efficiencies in bits per symbol for serving each terminal with respect to each scheduling interval, such that the favorability table comprises an efficiency table, and wherein the scheduling controller is configured to form a pseudo-efficiency table by applying scheduling bias values to the efficiencies to obtain biased efficiencies, and make scheduling decisions according to the biased efficiencies.
34. The satellite communications system according to item 32, wherein each scheduling interval has a fixed number of symbols for allocation, and wherein, to make the scheduling decisions, the scheduling controller is configured to select which scheduling intervals are used for which terminals according to the biased efficiencies, and determine byte allocations to the scheduled terminals in each scheduling interval in dependence on the corresponding efficiencies.
35. The satellite communications system according to any one of items 24-34, wherein the per-terminal signal quality metric for each terminal varies in relation to the different beam center targets as a function of the location of the terminal relative to the different beam center targets.
36. The satellite communications system according to any one of items 24-35, wherein, with respect to scheduling respective ones among the plurality terminals over the succession of scheduling intervals, the scheduling controller is configured to maximize a total capacity of the user beam.
37. The satellite communications system according to item 36, wherein, for maximizing the total capacity of the user beam, the scheduling controller is configured to solve a constrained optimization problem with respect to the succession of scheduling intervals, and wherein solving the constrained optimization problem maximizes capacity of the user beam under the constraint that service fairness among the plurality of terminals is maintained.
38. The satellite communications system according to any one of items 24-37, wherein the user beam is based on beamforming by the satellite communications system, and wherein each beam center target corresponds to a respective set of beam weights used in the beamforming.
39. The satellite communications system according to item 38, wherein the beamforming controller is configured to calculate respective sets of beam weights for the beam oscillation cycle, each set corresponding to a respective one among the different beam center targets, and the beamformer is configured to apply the corresponding set for each selected beam center target.
40. The satellite communications system according to item 39, wherein the beamformer is onboard the satellite, and wherein the beamforming controller resides in a ground segment of the satellite communications system and is configured to control the beamformer by outputting control signaling for transfer to the satellite via one or more of satellite access nodes in the ground segment of the satellite communications system.
41. The satellite communications system according to any one of items 24-40, wherein the user beam is one among a plurality of user beams used by the satellite communications system, and wherein:
   each user beam has a respective set of beam center targets containing a same number and a same relative geographic arrangement of different beam center targets, and each user beam further has a respective plurality of terminals assigned and a respective user beam coverage area;
   the beam oscillation cycle is common for the plurality of user beams, and defines a common selection sequence applicable to all respective sets of user beam center targets; and
   the beam oscillation controller is configured to jointly select the different beam center targets from the respective sets of beam center targets for the plurality of user beams over the succession of scheduling intervals according to the common selection sequence, and correspondingly schedule the respective pluralities of terminals over the succession of scheduling intervals.
42. The satellite communications system according to item 41, wherein the plurality of user beams comprises a plurality of forward user beams used for transmitting forward-link traffic to individual ones among the respective pluralities of terminals.
43. The satellite communications system according to item 41, wherein the plurality of user beams is a plurality of return user beams used for receiving return-link traffic from individual ones among the respective pluralities of terminals.
44. The satellite communications system according to item 41, wherein the plurality of user beams is a plurality of forward user beams, wherein the satellite communications system further uses a plurality of return user beams, and wherein the satellite communications system is configured to select beam center targets and schedule respective terminals with respect to the plurality of forward user beams independent of selecting different beam center targets and scheduling respective terminals with respect to the plurality of return user beams.
45. The satellite communications system according to item 24, wherein the plurality of antenna elements comprise a plurality of cooperative transmit elements coupled to respective output ends of a plurality of transponders that have respective input ends coupled to a plurality of cooperative receive elements, each transponder defining a signal pathway from a respective receive element to a respective transmit element, wherein the satellite communications system includes a plurality of geographically-distributed satellite access nodes (SANs), each SAN configured to transmit a respective uplink signal such that each receive element at the satellite receives a unique superposition of the respective uplink signals and, correspondingly, each transmit element transmits a downlink signal corresponding to that unique superposition, wherein the beamforming controller, the beamformer, and the scheduling controller are in a ground segment of the satellite communications system, and wherein the beamforming controller maintains a set of beam weights that, when used to weight the respective uplink signals as transmitted by the plurality of SANs, result in far-field superpositions of the downlink signals that form the user beam.
46. The satellite communications system according to item 45, wherein the beamforming controller is configured to cooperate with the beamformer to adjust the set of beam weights over the beam oscillation cycle and thereby recenter the user beam on the different beam center targets, one at a time.
47. The satellite communications system according to item 24, wherein the beamformer is onboard the satellite and the beamforming controller is in a ground segment of the satellite communications system, and wherein the ground segment includes one or more satellite access nodes (SANs) that are configured to transmit beam oscillation information generated by the beamforming controller from the ground segment to the satellite, for controlling the beamformer according to the beam oscillation cycle.
48. The satellite communications system according to item 24, wherein the beamforming controller and the beamformer are onboard the satellite.

## Claims

1. A method of scheduling terminals in a satellite communications system, the method comprising:
obtaining assignment information indicating assignment of a plurality of terminals to a user beam of the satellite communications system, wherein the user beam is associated with a nominal user beam coverage area and has a beam width configured according to the size of the nominal user beam coverage area, and wherein the plurality of terminals located within the nominal user beam coverage area;
selecting different beam center targets for a beam center of the user beam over a succession of scheduling intervals according to a beam oscillation cycle that defines an order and timing for selecting the different beam center targets over the succession of scheduling intervals, and wherein the different beam center targets are different locations within the nominal user beam coverage area; and
scheduling traffic opportunistically for respective ones among the plurality of terminals over the succession of scheduling intervals, such that capacity is maximized while still honoring fairness requirements for each terminal, the scheduling performed in dependence on per-terminal signal quality metrics that vary characteristically with respect to the different beam center targets, in dependence on a location of each terminal relative to the different beam center targets.

2. The method according to claim 1, wherein the different beam center targets comprise a respective set of distributed locations within the nominal user beam coverage area,
and, optionally, wherein the respective set of distributed locations is based on a predefined pattern.

3. The method according to any one of claims 1 or 2, wherein the beam oscillation cycle defines a selection sequence of the different beam center targets.

4. The method according to claim 3, wherein the selection sequence includes a selection dwell time for each beam center target among the different beam center targets,
and, optionally, wherein the selection dwell times are non-uniform in dependence on a distribution of the plurality of terminals within the nominal user beam coverage area.

5. The method according to any one of claims 3 or 4, wherein the selection sequence is predefined.

6. The method according to any one of claims 1-5, further comprising determining the beam center targets in dependence on a distribution of the plurality of terminals within the nominal user beam coverage area.

7. The method according to any one of claims 1-6, wherein the succession of scheduling intervals comprises one scheduling frame among a plurality of successive scheduling frames, and wherein the method comprises carrying out the beam oscillation cycle and the scheduling with respect to each scheduling frame, and further wherein the per-terminal signal quality metrics are updated with respect to each scheduling frame.

8. The method according to any one of claims 1-7, wherein the per-terminal signal quality metrics comprise favorability metric values in a favorability table, with the favorability table containing a corresponding favorability metric value for each terminal with respect to each scheduling interval.

9. The method according to claim 8, wherein the favorability metric values are efficiencies in bits per symbol for serving each terminal with respect to each scheduling interval, such that the favorability table comprises an efficiency table, and wherein the method further includes forming a pseudo-efficiency table by applying scheduling bias values to the efficiencies to obtain biased efficiencies, and making scheduling decisions according to the biased efficiencies,
and, optionally, wherein each terminal has a required number of bytes which must be served with respect to the scheduling frame, and wherein making the scheduling decisions comprises selecting which scheduling intervals are used for which terminals according to the biased efficiencies of the terminals across the succession of scheduling intervals.

10. The method according to claim 8, wherein the scheduling bias values are one of: per-interval scheduling bias values or per-terminal scheduling bias values.

11. The method according to any of claims 1-10, wherein scheduling the traffic opportunistically for respective ones among the plurality of terminals over the succession of scheduling intervals comprises solving a constrained optimization problem with respect to the succession of scheduling intervals, wherein solving the constrained optimization problem maximizes a capacity of the user beam under the constraint that service fairness among the plurality of terminals is maintained.

12. The method according to any one of claims 1-11, wherein the user beam is based on beamforming by the satellite communications system, and wherein each beam center target corresponds to a respective set of beam weights used in the beamforming.

13. The method according to claim 12, wherein selecting the different beam center targets comprises controlling a beamformer to apply the respective sets of beam weights over the beam oscillation cycle, each respective set of beam weights applied during a respective subset of one or more scheduling intervals within the succession of scheduling intervals,
and, optionally, wherein the beamformer is onboard a satellite of the satellite communications system, and wherein controlling the beamformer comprises outputting control signaling for transfer to the satellite.

14. The method according to any one of claims 1-12, wherein the user beam is one among a plurality of user beams used by the satellite communications system, and wherein:
each user beam has a respective set of beam center targets containing a same number and a same relative geographic arrangement of different beam center targets, and each user beam further has a respective plurality of terminals assigned and a respective user beam coverage area;
the beam oscillation cycle is common for the plurality of user beams, and defines a common selection sequence applicable to all respective sets of user beam center targets; and
the method comprises jointly selecting the different beam center targets from the respective sets of beam center targets for the plurality of user beams over the succession of scheduling intervals according to the common selection sequence, and correspondingly scheduling the respective pluralities of terminals over the succession of scheduling intervals.

15. The method according to claim 14, wherein the plurality of user beams comprises a plurality of forward user beams used for transmitting forward-link traffic to individual ones among the respective pluralities of terminals, or
wherein the plurality of user beams is a plurality of return user beams used for receiving return-link traffic from individual ones among the respective pluralities of terminals, or
wherein the plurality of user beams is a plurality of forward user beams, wherein the satellite communications system further uses a plurality of return user beams, and wherein the method comprises selecting beam center targets and opportunistically scheduling respective terminals with respect to the plurality of forward user beams independent of selecting different beam center targets and opportunistically scheduling respective terminals with respect to the plurality of return user beams.
